# EUROPÄISCHE PATENTSCHRIFT

(11) **EP 3 441 981 B1**
(45) Veröffentlichungstag und Bekanntmachung des Hinweises auf die Patenterteilung: **18.03.2020**
(21) Anmeldenummer: 18194157.6
(22) Anmeldetag: 09.12.2016
(51) Int. Cl.: G21K 1/06

(54) **RÖNTGENOPTIK-BAUGRUPPE MIT UMSCHALTSYSTEM FÜR DREI STRAHLPFADE UND KUGELGELENK UND ZUGEHÖRIGES RÖNTGENDIFFRAKTOMETER**
X-RAY LENS MODULE WITH SWITCHOVER SYSTEM FOR THREE BEAM PATHS AND SWIVEL JOINT AND CORRESPONDING X-RAY DIFFRACTION METER
MODULE D'OPTIQUE EN RAYONS X COMPRENANT UN SYSTÈME DE TRANSFERT POUR TROIS TRAJETS DE RAYONNEMENT ET ROTULE ET DIFFRACTOMÈTRE CORRESPONDANT

(30) Priorität: 18.12.2015 DE 102015226101
(43) Veröffentlichungstag der Anmeldung: 13.02.2019
(62) Teilanmeldung aus: 16203204.9
(73) Patentinhaber: Bruker AXS GmbH, 76187 Karlsruhe (DE)
(72) Erfinder: Hoffmann, Frank Hans, 76744 Wörth am Rhein (DE); Mettendorf, Kai Uwe, 76133 Karlsruhe (DE)
(74) Vertreter: Kohler Schmid Möbus Patentanwälte

(56) Entgegenhaltungen:
- EP-A1- 1 912 061
- EP-A2- 1 324 023
- WO-A1-03/091716
- DE-A1-102009 047 672
- JP-A- H0 949 811
- US-A- 5 475 728
- US-A1- 2004 042 584
- FUJII Y ET AL: "A COMPACT ULTRAHIGH VACUUM X-RAY DIFFRACTOMETER FOR SURFACE GLANCING SCATTERING USING A ROTATING-ANODE SOURCE", REVIEW OF SCIENTIFIC INSTRUMENTS, AIP, MELVILLE, NY, US, Bd. 68, Nr. 5, 1. Mai 1997 (1997-05-01), Seiten 1975-1979, XP000723504, ISSN: 0034-6748, DOI: 10.1063/1.1148085
- "Precision Mechanical Design of an UHV-Compatible Artificial Channel-Cut X-ray Monochromator", SPIE, PO BOX 10 BELLINGHAM WA 98227-0010 USA, 2007, XP040243982,

## Beschreibung

Die Erfindung betrifft eine Röntgenoptik-Baugruppe für ein Röntgendiffraktometer,
umfassend einen Multischichtspiegel, insbesondere Goebel-Spiegel, und ein Umschaltsystem, mit dem Strahlpfade für einen Röntgenstrahl auswählbar sind, wobei die Röntgenoptik-Baugruppe weiterhin einen Monochromator, insbesondere einen Channel-Cut-Kristall, umfasst,
und wobei mit dem Umschaltsystem drei Strahlpfade für den Röntgenstrahl auswählbar sind,
wobei ein erster Strahlpfad in einer ersten Stellung des Umschaltsystems am Multischichtspiegel vorbei führt und am Monochromator vorbei führt,
wobei ein zweiter Strahlpfad in einer zweiten Stellung des Umschaltsystems den Multischichtspiegel enthält und am Monochromator vorbei führt,
und wobei ein dritter Strahlpfad in einer dritten Stellung des Umschaltsystems den Multischichtspiegel enthält und den Monochromator enthält.

Eine solche Röntgenoptik-Baugruppe ist beispielsweise aus der EP 1 912 061 A1 bekannt geworden.

Röntgendiffraktometrie (XRD, x-ray diffraction) ist ein leistungsfähiges Verfahren der instrumentellen Analytik, mit dem die Charakterisierung von insbesondere kristallinen Materialien erfolgen kann. Je nach analytischer Aufgabenstellung kommen verschiedene Messgeometrien zum Einsatz. Beispielsweise wird die Bragg-Brentano-Geometrie, bei der ein Röntgenstrahl nach Reflektion an der Probe auf den Detektor (bzw. die Detektorblende) fokussiert ist, häufig in der Pulverdiffraktometrie eingesetzt. In Parallelstrahlgeometrie wird ein Röntgenstrahl parallelisiert auf die Probe gerichtet, etwa für Texturmessungen. Für die verschiedenen Messgeometrien werden verschiedene röntgenoptische Elemente im Strahlengang benötigt.

In der Praxis wird häufig dasselbe Röntgendiffraktometer im Wechsel mit verschiedenen Messgeometrien eingesetzt. Entsprechend ist es wünschenswert, die für einen Wechsel der Messgeometrie nötigen Umbau- und Justagemaßnahmen so gering wie möglich zu halten.

Die DE 10 2009 047 672 A1 offenbart einen röntgenoptischen Aufbau, bei dem ein Wechsel zwischen einer Reflektionsgeometrie mit einem Röntgenspiegel im primärstrahlseitigen Strahlengang und einer Transmissionsgeometrie mit zwei Röntgenspiegeln im primärstrahlseitigen Strahlengang mittels eines verschiebbaren oder rotierbaren Blendensystems eingerichtet ist. Umbau- und Justagearbeiten sind dadurch minimiert oder überflüssig.

Aus der US 6,807,251 B2 ist ein Röntgendiffraktometer für Messungen in einer fokussierenden Geometrie ohne Reflektion an einem Multischichtspiegel und in Parallelstrahlgeometrie mit Reflektion an dem Multischichtspiegel bekannt geworden, wobei mit einer drehbaren, geschlitzten Scheibe hinter dem Multischichtspiegel einer der Strahlpfade ausgewählt werden kann. Weiterhin ist ein Divergenzspalt vorgesehen, der zwischen den Strahlpfaden verfahren werden kann.

Die bekannten Röntgendiffraktometer lassen einen Wechsel zwischen zwei Strahlpfaden zu, etwa einer Bragg-Brentano-Geometrie und einer Parallelstrahlgeometrie. Dies ist in vielen analytischen Aufgabenstellungen ausreichend; in manchen Fällen werden jedoch hochaufgelöste Röntgenbeugungsinformationen benötigt, die mit den bekannten umschaltbaren Röntgenoptiken nicht zugänglich sind.

Die US 6,359,964 B1 beschreibt eine Vorrichtung zur Röntgenanalyse, die einen parabolischen Multilayer-Spiegel zur Parallelisierung von Röntgenstrahlen sowie eine Vorrichtung zum Monochromatisieren der parallelisierten Strahlung, insbesondere mit einem Zwei-Kristall-Monochromator, aufweist. Der Multilayer-Spiegel kann um 180° gedreht werden, wodurch der Röntgenstrahl entweder über den Multilayer-Spiegel und den Monochromator auf das zu untersuchende Objekt oder alternativ direkt vom Multilayer-Spiegel auf das Objekt geleitet wird. Mit dem monochromatisierten Röntgenstrahl sind hochauflösende Röntgenbeugungsmessungen möglich.

Aus der EP 1 912 061 A1 ist ein röntgenoptisches System bekannt geworden, bei dem mit einer geschlitzen, rotierbaren Scheibe ein Strahlengang mit oder ohne einen vor der Scheibe angeordneten Multischichtspiegel ausgewählt werden kann. Zudem kann hinter der Scheibe ein Channel-Cut-Kristall oder eine Polykapillare in den Strahlengang genommen werden.

Aus Y. Fujii et al., Rev. Sci. Instrum. 68 (5), May 1997, Seiten 1975-1979, ist ein Röntgendiffraktometer bekannt geworden, bei dem ein Ge(111) Channel-Cut-Kristall Monochromator auf einem 4-Achs-Goniometer angeordnet ist.

Die US 2004/0042584 A1 beschreibt eine Goniometer-Anordnung für die Röntgen-Diffraktographie, bei der ein sphärischer Sektor in einem Kugellager gelagert ist.

### Aufgabe der Erfindung

Der Erfindung liegt die Aufgabe zugrunde, eine Röntgenoptik-Baugruppe bzw. ein Röntgendiffraktometer zur Verfügung zu stellen, das auf einfache Weise noch universeller für verschiedene Messgeometrien eingesetzt werden kann, und eine einfache und präzise Justage des Monochromators ermöglicht.

### Kurze Beschreibung der Erfindung

Diese Aufgabe wird gelöst durch eine Röntgenoptik-Baugruppe der eingangs genannten Art, die dadurch gekennzeichnet ist,
dass der Monochromator an einer Justiereinheit befestigt ist, die mit einem in zwei Freiheitsgraden drehbaren Gelenk gelagert ist,
dass das drehbare Gelenk als ein Kugelgelenk ausgebildet ist,
dass eine Führungsanordnung mit zwei einander gegenüberliegenden Führungsabschnitten vorgesehen ist, zwischen denen die Justiereinheit anliegend geführt ist, so dass die Justiereinheit parallel zu einer Führungsebene, die parallel zu den Führungsabschnitten liegt, um eine erste Achse (y), die durch den Mittelpunkt des Kugelgelenks und senkrecht zur Führungsebene verläuft, verschwenkbar ist,
dass weiterhin die Justiereinheit um eine zweite Achse (x), die durch den Mittelpunkt des Kugelgelenks und senkrecht zur ersten Achse (y) verläuft, drehbar ist,
und dass die Justiereinheit bezüglich der Richtung der zweiten Achse (x) beabstandet vom Mittelpunkt des Kugelgelenks an den Führungsabschnitten anliegt, so dass ein Verschwenken der Justiereinheit um eine dritte Achse (z), die durch den Mittelpunkt des Kugelgelenks und senkrecht zur ersten Achse (y) und senkrecht zur zweiten Achse (x) verläuft, blockiert ist.

Mit der erfindungsgemäßen Röntgenoptik-Baugruppe kann zwischen drei Strahlpfaden umgeschaltet werden, um eine jeweilige analytische Aufgabenstellung mit einer angepassten Strahlgeometrie bzw. angepassten Röntgenoptik bearbeiten zu können. In allen drei Stellungen des Umschaltsystems, gegebenenfalls unterstützt von weiteren Verstellsystem-Einrichtungen des Röntgendiffraktometers, in welchem die Röntgenoptik-Baugruppe verbaut ist, ist der ausgehende Röntgenstrahl auf eine gemeinsame Probenposition gerichtet. Bei Auswahl eines Strahlpfades sind die übrigen Strahlpfade blockiert (abgeschattet).

Nach der Umschaltung sind an der Röntgenoptik-Baugruppe grundsätzlich keine weiteren Umbaumaßnahmen mehr nötig, und bevorzugt sind auch Justagearbeiten nicht nötig oder minimiert. Dadurch kann schnell zwischen den unterschiedlichen Messgeometrien gewechselt werden. Im ersten Strahlengang kann besonders viel Intensität genutzt werden, etwa in Bragg-Brentanogeometrie für eine Pulverdiffraktometrie. Im zweiten Strahlengang kann ein mittels des Multischichtspiegel geformter Röntgenstrahl genutzt werden, etwa in Parallelstrahlgeometrie für Stress- und Texturmessungen, oder auch in streifendem Einfall für die gezielte Charakterisierung oberflächennahen Probenmaterials. Im dritten Strahlengang kann ein mittels des Multischichtspiegels geformter und monochromatisierter Röntgenstrahl für hochauflösende Röntgenbeugungsmessungen genutzt werden, etwa für die Defektanalyse in nahezu perfekten Kristallen wie Halbleiterwafern.

Die Röntgenoptik-Baugruppe ist typischerweise zu einem einzelnen Röntgenoptik-Bauteil (Modul) zusammengefasst, das als Ganzes in einem Röntgendiffraktometer eingebaut werden kann. Die Umschaltung erfolgt typischerweise motorisiert und automatisch, kann aber auch manuell eingerichtet sein.

Gemäß der Erfindung ist der Monochromator an einer Justiereinheit befestigt, die mit einem in zwei Freiheitsgraden drehbaren Gelenk gelagert ist. Über das drehbare Gelenk kann der Monochromator (relativ zum Multischichtspiegel bzw. dem von ihm ausgehenden Röntgenstrahl) bezüglich seiner Drehlage justiert werden. Das Gelenk bzw. die Drehachsen sind bevorzugt nahe zum Monochromator bzw. zum Röntgenstrahl angeordnet, z.B. in einer Entfernung von 2 cm oder weniger. Typischerweise ist das Gelenk an einem verfahrbaren Schlitten der Röntgenoptik-Baugruppe gelagert, der den Monochromator und ein umschaltbares Blendensystem trägt. Die Justiereinheit umfasst typischerweise ein Halteelement, an dem das Gelenk ausgebildet ist, und ein Justierelement zur Verstellung des Monochromators, insbesondere einen vom Halteelement seitlich ausgreifenden Justierhebel.

Gemäß der Erfindung ist das drehbare Gelenk als ein Kugelgelenk ausgebildet. Kugelgelenke ermöglichen sehr präzise und gut haltende Einstellungen. Das Kugelgelenk ist grundsätzlich bezüglich drei Freiheitsgraden drehbar. Ein Freiheitsgrad wird erfindungsgemäß durch eine geeignete Führung blockiert, um die Justage zu erleichtern.

Die Drehung der Justiereinheit wird auf zwei Achsen (x, y) beschränkt, um die Justage zu vereinfachen. Die Führungsabschnitte sind meist als Führungsflächen ausgebildet, können aber auch als Führungskanten ausgebildet sein. Die Führungsabschnitte sind typischerweise geringfügig elastisch auf die Justiereinheit zu vorgespannt, um das Spiel zu verringern. Die Führungsanordnung ist typischerweise am verfahrbaren Schlitten ausgebildet. Die erste, zweite und dritte Achse (x, y, z) sind zueinander senkrecht orientiert.

### Bevorzugte Ausführungsformen der Erfindung

### Ausführungsformen Schlittenmechanik

Bei einer bevorzugten Ausführungsform ist vorgesehen,
dass das Umschaltsystem einen gegenüber dem Multischichtspiegel verfahrbaren Schlitten und ein umschaltbares Blendensystem aufweist,
wobei das umschaltbare Blendensystem und der Monochromator auf dem Schlitten angeordnet sind,
und dass durch Verfahren des Schlittens wahlweise
- das umschaltbare Blendensystem zur Auswahl des ersten oder zweiten Strahlpfades
- oder der Monochromator zur Auswahl des dritten Strahlpfades im Röntgenstrahl anordenbar ist.
Mit dem verfahrbaren Schlitten kann auf einfache Weise und auf kompaktem Raum ein Wechsel der im (bzw. am) Röntgenstrahl angeordneten Komponente erfolgen. Mit dieser Ausführungsform kann eine besonders hohe Intensität an der Probe erreicht werden, insbesondere im ersten Strahlengang in Bragg-Brentano-Geometrie, weil die Röntgenoptik-Baugruppe durch den kompakten Aufbau näher an der Probe angeordnet werden kann. Der Monochromator (etwa ein Channel-Cut-Kristall) ist zur Freigabe des Bragg-Brentano Strahlengangs herausgeschoben (etwa nach oben verschoben) und nicht als zusätzliches Bauteil vor der Röntgenoptik (bzw. nicht seriell zum umschaltbaren Blendensystem) montiert. Der Schlitten ist üblicherweise motorisch angetrieben, und die Verfahrrichtung (VRS) des Schlittens verläuft üblicherweise senkrecht zur Strahlausbreitungsrichtung. Blendensystem und Monochromator liegen in den Strahlpfaden üblicherweise hinter dem Multischichtspiegel. Weiterhin ist üblicherweise das umschaltbare Blendensystem motorisch angetrieben. Das umschaltbare Blendensystem kann eine rotierbare Blende umfassen, was wiederum besonders kompakt ist. Alternativ kann das umschaltbare Blendensystem beispielsweise auch eine auf dem Schlitten verfahrbare Blende umfassen.

Bei einer bevorzugten Weiterbildung dieser Ausführungsform ist der Schlitten an einem Grundkörper der Röntgenoptik-Baugruppe mit Führungen zwischen zwei Endanschlägen verfahrbar, insbesondere wobei die zwei Endanschläge verstellbar ausgebildet sind. Die Endanschläge erleichtern das schnelle und genaue Positionieren des umschaltbaren Blendensystems und des Monochromators. Mit verstellbaren Endanschlägen können die Positionen des umschaltbaren Blendensystems und des Monochromators bezüglich der Verfahrrichtung (VRS) des Schlittens justiert werden. Am Grundkörper ist der Multischichtspiegel befestigt.

Eine Weiterentwicklung hierzu sieht vor, dass am oder im Schlitten ein Führungsbolzen geführt ist, der parallel zu einer Verfahrrichtung (VRS) des Schlittens entlang einer Schieberichtung (SRF) gegenüber dem Schlitten verfahrbar ist, und dass in Schieberichtung (SRF) beiderseits des Führungsbolzens am oder im Schlitten jeweils ein Anlageelement ausgebildet ist, das parallel zur Schieberichtung (SRF) am oder im Schlitten verfahrbar ist und über ein jeweiliges erstes Federelement am Schlitten abgestützt ist. Mit dem Führungsbolzen kann der Schlitten über ein jeweiliges Anlageelement und ein jeweiliges erstes Federelement weich, aber mit ausreichender Kraft an den jeweiligen Endanschlag angelegt und angedrückt werden, und dadurch präzise positioniert werden, ohne dass es auf die genaue Positionierung des Führungsbolzens relativ zum Endanschlag ankommt. Insbesondere kann auch die Position des Endanschlags variieren, und dennoch zuverlässig eine ausreichende Kraft auf den Schlitten für eine präzise Anlage am Endanschlag ausgeübt werden. Nach Erreichen des Endanschlags durch den Schlitten wird der Führungsbolzen noch merklich weiter, typischerweise ca. über die Hälfte seines möglichen Verfahrwegs (maximalen Federhubs), gegen die Kraft des ersten Federelements auf den Endanschlag zu verfahren. Ein jeweiliger Verfahrweg der Anlageelemente gegenüber dem Schlitten, ausgehend von einer Mittellage des Führungsbolzens, beträgt bevorzugt wenigstens 3,0 mm. Die Anlageelemente können als Sperrscheiben ausgebildet sein, deren Verfahrweg auf den Führungsbolzen zu durch Sperranschläge begrenzt ist; entsprechend bleibt dann beim Verfahren des Führungsbolzens aus einer Mittelstellung zumindest zeitweise lediglich ein Anlegeelement am Führungsbolzen angelegt. Dadurch wird verhindert, dass das Verfahren auf einen der Endanschläge zu vom ersten Federelement des gegenüberliegenden Endanschlags unterstützt wird.

Bevorzugt ist dabei vorgesehen, dass am Grundkörper der Röntgenoptik-Baugruppe eine Antriebsspindel ausgebildet ist, auf der eine am Grundkörper geführte Spindelmutter aufsitzt, und dass der Führungsbolzen an die Spindelmutter gekoppelt ist, insbesondere über einen vom Führungsbolzen seitlich abstehenden Mitnehmer. Die Spindelmechanik ist einfach, robust und kostengünstig. Aufgrund der Kraftübertragung über den Führungsbolzen und die ersten Federelemente ist die an sich wenig präzise Spindelmechanik auch ausreichend für ein präzises Positionieren des Schlittens.

### Ausführungsformen zur Justiereinheit

Bei einer bevorzugten Ausführungsform umfasst die Justiereinheit ein Halteelement und ein Justierelement, wobei das Halteelement einen Kugelabschnitt, einen ersten Verbindungsabschnitt vom Kugelabschnitt zum Monochromator, und einen zweiten Verbindungsabschnitt vom Kugelabschnitt zum Justierelement aufweist. Das Halteelement ist typischerweise im Wesentlichen gerade ausgebildet, mit näherungsweise mittig liegendem Kugelabschnitt und gegenüberliegenden Verbindungsabschnitten ("Spindel").

Diese Ausführungsform ermöglicht einen günstigen Krafteintrag bei der Justage und eine kompakte Bauform.

Vorteilhaft ist auch eine Ausführungsform, die vorsieht, dass die Justiereinheit mit einem Kugelabschnitt ausgebildet ist, wobei der Kugelabschnitt zwischen zwei Gelenkpfannen-Elementen angeordnet ist, insbesondere wobei die Gelenkpfannen-Elemente als gelochte Kunststoffscheiben ausgebildet sind, und dass die Gelenkpfannen-Elemente mittels eines oder mehrerer zweiter Federelemente, insbesondere Tellerfedern, aufeinander zu vorgespannt sind. Diese Bauform ermöglicht auf einfache Weise ein nahezu spielfreies Halten der Justiereinheit.

Vorteilhafter Weise ist die Führungsanordnung dabei drehbar um die zweite Achse (x) ausgebildet, wobei die Justiereinheit bezüglich der Richtung der dritten Achse (z) beabstandet vom Mittelpunkt des Kugelgelenks an den Führungsabschnitten anliegt, so dass die Justiereinheit bei Drehung um die zweite Achse (x) die Führungsanordnung mitdreht,
insbesondere wobei die Führungsanordnung mit einer Sperrhülse ausgebildet ist. Bei dieser Ausführungsform ist die Lage der ersten Achse (y) fest zum Monochromator. Dies ermöglicht eine besonders einfache, intuitive Justage. Zudem können in dieser Bauform, sofern relevant, bei großen Drehwinkeln Nichtlinearitäten vermieden werden. Die Führungsanordnung ist typischerweise am verfahrbaren Schlitten drehbar gelagert.

Alternativ hierzu kann vorgesehen sein, dass die Führungsanordnung drehfest ausgebildet ist,
dass die Justiereinheit mit Kreiszylindermantelflächenabschnitten an den Führungsabschnitten anliegt, wobei eine gemeinsame Zylinderachse der Kreiszylindermantelflächenabschnitte durch den Mittelpunkt des Kugelgelenks verläuft, so dass bei Drehung der Justiereinheit um die zweite Achse (x) sich die Justiereinheit gegenüber Führungsanordnung um die gemeinsame Zylinderachse dreht,
insbesondere wobei die Führungsanordnung die Justiereinheit in einem kreiszylindrischen Bereich führt. Diese Bauform ist besonders einfach. Üblicherweise werden die Kreiszylindermantelflächenabschnitte durch gegenüberliegende Seiten eines kreiszylindrischen Bereichs der Justiereinheit ausgebildet. Bei in Richtung der x-Achse ausgedehnten Führungsabschnitten können die Kreiszylindermantelflächenabschnitte axial auch sehr kurz ausgebildet sein; die Zylinderachse entspricht dann der Achse durch den gemeinsamen Kreisbogenabschnittemittelpunkt, senkrecht zur gemeinsamen Kreisebene.

Bei einer vorteilhaften Ausführungsform sind eine erste Justiermechanik zum Verschwenken der Justiereinheit um eine erste Achse (y) und eine zweite Justiermechanik zum Drehen der Justiereinheit um eine zweite Achse (x) vorhanden. Über die Justiermechaniken kann eine präzise Einstellung der Drehlage der Justiereinheit bezüglich der beiden Achsen (x, y) eingerichtet werden; zur ersten und zweiten Achse (x, y) siehe auch die vorhergehenden Weiterentwicklungen.

Eine vorteilhafte Weiterbildung dieser Ausführungsform sieht vor, dass die Justiereinheit einen im Wesentlichen quer zur zweiten Achse (x) ausgreifenden Justierhebel aufweist, an dem die erste und die zweite Justiermechanik angreifen, dass der Justierhebel mit der ersten Justiermechanik in einer Richtung näherungsweise parallel zur zweiten Achse (x) auslenkbar ist,
und dass der Justierhebel mit der zweiten Justiermechanik in einer Richtung näherungsweise parallel zur ersten Achse (y) auslenkbar ist. Mit dem Justierhebel ist auf einfache und präzise Art eine Justage des Monochromators möglich. Alternativ zu einem Justierhebel kann auch beispielsweise ein Justierrad eingesetzt werden.

Bei einer weiteren Weiterbildung pressen die erste Justiermechanik und die zweite Justiermechanik jeweils die Justiereinheit mit der Kraft eines jeweiligen dritten Federelements, insbesondere einer Zugfeder, an einen verstellbaren Justieranschlag, insbesondere eine Gewindespindel oder Verstellschraube. Dadurch ist eine spielarme Positionierung des Monochromators möglich.

### Erfindungsgemäße Röntgendiffraktometer

In den Rahmen der vorliegenden Erfindung fällt auch ein Röntgendiffraktometer, umfassend
- eine Röntgenquelle,
- eine Position für eine Probe,
- einen Röntgendetektor, der auf einem Kreisbogen um die Position der Probe verfahrbar ist,
- und ein Verstellsystem, mit dem Strahlpfade für einen Röntgenstrahl auswählbar sind,
wobei das Röntgendiffraktometer weiterhin eine oben beschriebene, erfindungsgemäße Röntgenoptik-Baugruppe umfasst,
wobei das Verstellsystem des Röntgendiffraktometers zumindest das Umschaltsystem der Röntgenoptik-Baugruppe umfasst,
und wobei
- der erste Strahlpfad in einer ersten Verstellung des Verstellsystems mit dem Umschaltsystem in der ersten Stellung,
- weiterhin der zweite Strahlpfad in einer zweiten Verstellung des Verstellsystems mit dem Umschaltsystem in der zweiten Stellung,
- und weiterhin der dritte Strahlpfad in einer dritten Verstellung des Verstellsystems mit dem Umschaltsystem in der dritten Stellung,
jeweils den Röntgenstrahl von der Röntgenquelle auf die Position der Probe richten. Mit dem erfindungsgemäßen Röntgendiffraktometer kann schnell zwischen drei Messgeometrien gewechselt werden, insbesondere motorisch und automatisiert. Die Umstellung der Strahlpfade kann durch Umschalten des Umschaltsystems, nötigenfalls ergänzt durch Umschalten/Verstellen von weiteren Einrichtungen des Verstellsystems, erfolgen. Ein weiterer Umbau ist nicht erforderlich; ebenso ist typischerweise eine weitere Justage ist nicht erforderlich oder minimiert.

Besonders bevorzugt ist eine Ausführungsform des erfindungsgemäßen Röntgendiffraktometers, bei der das Verstellsystem weiterhin einen Primärseiten-Schlitten umfasst, auf dem zumindest die Röntgenquelle und die Röntgenoptik-Baugruppe angeordnet sind, und der zumindest zwischen einer ersten Lage und einer zweiten Lage verfahren und/oder verschwenkt werden kann,
insbesondere wobei ein Lageunterschied zwischen der zweiten Lage und der ersten Lage des Primärseiten-Schlittens eine Röntgenstrahländerung durch den Monochromator im dritten Strahlpfad gegenüber dem zweiten Strahlpfad ausgleicht. Entsprechend wird für den zweiten Strahlpfad bzw. die zweite Verstellung die erste Lage, und für den dritten Strahlpfad bzw. die dritte Verstellung die zweite Lage genutzt. Für den ersten Strahlpfad bzw. die erste Verstellung wird typischerweise die erste Lage genutzt. Diese Bauform ermöglicht die Nutzung eines Monochromators, der den Röntgenstrahl im dritten Strahlpfad gegenüber dem zweiten Strahlpfad ausgangsseitig der Röntgenoptik-Baugruppe verändert, insbesondere die Nutzung eines (einfachen) Channel-Cut-Kristalls, wodurch auch sehr kompakte Bauformen (mit geringem Abstand zwischen Röntgenquelle und Probe) ermöglicht werden. Eine typische Röntgenstrahländerung durch den Monochromator ist ein Parallelversatz des Röntgenstrahls, der durch eine gegengleiche, gemeinsame Translation von Röntgenquelle und Röntgenoptik-Baugruppe ausgeglichen wird.

Bei einer alternativen, vorteilhaften Ausführungsform ist der Monochromator so ausgebildet, dass der zweite Strahlpfad und der dritte Strahlpfad ausgangsseitig der Röntgenoptik-Baugruppe relativ zur Röntgenoptik-Baugruppe identisch verlaufen, insbesondere wobei der Monochromator hintereinander zwei Channel-Cut-Kristalle in Bartels-Anordnung umfasst, und dass das Verstellsystem lediglich das Umschaltsystem der Röntgenoptik-Baugruppe umfasst. Diese Bauform ist von der Umschaltung her besonders einfach, da kein Primärseiten-Schlitten benötigt wird. Allerdings muss der Monochromator für diese Ausführungsform besonders präzise gefertigt sein.

Bei einer bevorzugten Ausführungsform ist vorgesehen, dass der erste Strahlpfad in einer Bragg-Brentano-Geometrie den Röntgenstrahl nach Reflexion an der Position der Probe auf den Kreisbogen fokussiert, und dass der zweite Strahlpfad und der dritte Strahlpfad jeweils in einer Parallelstrahlgeometrie den Röntgenstrahl auf die Position der Probe richten. Diese Bauform ist besonders einfach, insbesondere mit einem Göbelspiegel als Multischicht-Spiegel und einem Channel-Cut-Kristall als Monochromator.

Eine alternative Ausführungsform sieht vor, dass der erste Strahlpfad in einer Bragg-Brentano-Geometrie den Röntgenstrahl nach Reflexion an der Position der Probe auf den Kreisbogen fokussiert,
dass der zweite Strahlpfad in einer Parallelstrahlgeometrie den Röntgenstrahl auf die Position der Probe richtet,
und dass der dritte Strahlpfad den Röntgenstrahl durch die Position der Probe hindurch auf den Kreisbogen fokussiert,
insbesondere wobei der Monochromator einen Johansson-Monochromator umfasst. In dieser Bauform kann im dritten Strahlpfad eine Transmissionsgeometrie genutzt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine Schemadarstellung einer Ausführungsform eines erfindungsgemäßen Röntgendiffraktometers, in erster Umschalt-Stellung der Röntgenoptik-Baugruppe für den ersten Strahlpfad in Bragg-Brentano-Geometrie;
- Fig. 2: das Röntgendiffraktometer von Fig. 1, in zweiter Umschalt-Stellung der Röntgenoptik-Baugruppe für den zweiten Strahlpfad in Parallelstrahlgeometrie;
- Fig. 3a: das Röntgendiffraktometer von Fig. 1, in dritter Umschalt-Stellung der Röntgenoptik-Baugruppe für den dritten Strahlpfad in Parallelstrahlgeometrie, mit einem Primärseiten-Schlitten in einer verstellten Lage;
- Fig. 3b: das Röntgendiffraktometer ähnlich wie in Fig. 1 dargestellt, in dritter Umschalt-Stellung der Röntgenoptik-Baugruppe für den dritten Strahlpfad in Parallelstrahlgeometrie, mit einem Doppel-Channel-Cut-Kristall;
- Fig. 4a: eine schematische Perspektivansicht einer Ausführungsform einer erfindungsgemäßen Röntgenoptik-Baugruppe, mit einem verfahrbaren Schlitten an einem Grundkörper, mit dem Grundkörper im Vordergrund;
- Fig. 4b: eine schematische Perspektivansicht der Röntgenoptik-Baugruppe von Fig. 4a, mit dem Schlitten im Vordergrund;
- Fig. 4c: einen schematischen Querschnitt durch die Röntgenoptik-Baugruppe von Fig. 4a, auf Höhe der Strahlpfade;
- Fig. 5: einen schematischen Querschnitt durch die Röntgenoptik-Baugruppe von Fig. 4a, auf Höhe einer Antriebsspindel;
- Fig. 6: eine schematische Seitenansicht der Röntgenoptik-Baugruppe von Fig. 4a auf den Schlitten;
- Fig. 7: eine schematische Längsschnittdarstellung der Justiereinheit der Röntgenoptik-Baugruppe von Fig. 4a, einschließlich Justiermechaniken, mit drehbarer Sperrhülse;
- Fig. 8: eine schematische Aufsicht auf die Justiereinheit von Fig. 7;
- Fig. 9: eine schematische, gestufte Querschnittsdarstellung der Justiereinheit von Fig. 7, entlang Ebene B von Fig. 7;
- Fig. 10a: eine schematische Schnittdarstellung einer Spannmechanik der Röntgenoptik-Baugruppe von Fig. 4a, in einer Mittelstellung;
- Fig. 10b: die Spannmechanik von Fig. 10a, in einer Zwischenstellung bei Erreichen eines rechtsseitigen Endanschlags;
- Fig. 10c: die Spannmechanik von Fig. 10a, in einer verspannten Stellung am rechtsseitigen Endanschlag;
- Fig. 11: eine Längsschnittdarstellung einer alternativen Justiereinheit für eine Röntgenoptik-Baugruppe gemäß der Erfindung, einschließlich Justiermechaniken, mit fester Sperrscheibe;
- Fig. 12: eine schematische Aufsicht auf die Justiereinheit von Fig. 11;
- Fig. 13: eine schematische, gestufte Querschnittsdarstellung der Justiereinheit von Fig. 11, entlang Ebene B von Fig. 11 ;
- Fig. 14a: eine schematische Längsschnittdarstellung einer weiteren Justiereinheit für eine Röntgenoptik-Baugruppe gemäß der Erfindung, mit Gelenkstift;
- Fig. 14b: eine schematische Aufsicht auf die Justiereinheit von Fig. 14a.

### Überblick über die Erfindung

Mit der vorliegenden Erfindung wird eine Röntgenoptik-Baugruppe bzw. ein Röntgendiffrakometer mit einer solchen Baugruppe bereitgestellt, mit dem Röntgenbeugungsmessungen in drei verschiedenen Messgeometrien erfolgen können. Das Umschalten zwischen den Messgeometrien erfolgt bevorzugt automatisiert, sodass ein (manueller) Eingriff in die Messapparatur nicht erforderlich ist, der ggf. eine Neujustierung der Optiken erforderlich machen würde. Im Rahmen der Erfindung kann dieselbe Probe mit verschiedenen Modi vermessen werden, in der Regel ohne dass eine Zwischenjustierung der Optik erforderlich wäre.

Die Messgeometrien bzw. Messanwendungen umfassen bevorzugt die Bragg-Brentano Anwendung, typischerweise mit einer motorisierten Blende (z.B. für die Pulveranalyse, ggf. i.V.m. Riedveld Analyse), die Anwendung mit parallelisierendem Göbelspiegel (z.B. für Stress und Texturmessungen) sowie Anwendungen im Bereich der hochauflösenden XRD, mit Göbelspiegel kombiniert mit einem Monochromator.

Die Baugruppe kann platzsparend und kompakt aufgebaut werden, sodass auch in der Bragg-Brentano Anwendung der Röhrenfokus nicht zu weit von der zu untersuchenden Probe entfernt ist. Eine möglichst kurze Entfernung zwischen Röhrenfokus und Probe ist bei der Bragg-Brentano Messgeometrie für die Anwendung günstig.

Erfindungsgemäß ist der Monochromator an einer Justiereinheit befestigt, die mit einem Kugelgelenk gelagert ist. Bevorzugt ist hierfür vorgesehen, dass der Monochromator an einer Spindel mit angedrehter Kugel befestigt wird. Die Kugel wird zwischen zwei Kunststoffscheiben (=Gelenkpfannen) in einer Aufnahme mittels Tellerfedern verspannt. In diesem Kugelgelenk haben alle notwendigen Freiheitsgrade einen gemeinsamen Drehpunkt, wodurch Bauraum gespart wird. Durch Vorspannung ist die Spindel spielfrei gelagert. Nur noch das Verdrehen bzw. Verkippen um drei Achsen ist mit entsprechendem Kraftaufwand möglich. Zwei der drei Freiheitsgrade werden typischerweise durch die Lagerung eines Justierhebels mittels Gewindespindeln und Zugfedern fixiert. Der nicht verwendete dritte Freiheitsgrad wird über eine Sperrhülse blockiert. Durch Drehen an Gewindespindeln kann der Monochromator um zwei Achsen (x und y) in die gewünschte Position bezüglich des Röntgenstrahls gedreht werden.

Im Rahmen der Erfindung wird eine sehr präzise Umschaltmechanik möglich. Dies ist von Vorteil, da die Röntgenoptik während der Messung Lastwechseln ausgesetzt sein kann, die die Analyse nicht beeinflussen sollten. Die Erfindung nutzt dabei insbesondere eine stabile und genaue Justiervorrichtung für den Monochromator.

Für eine hochgenaue sowie reproduzierbare Positionierung der umzuschaltenden Bauteile der Röntgenoptik-Baugruppe an den Endlagen einer Schlitten-Translation wird ein Spannmechanismus vorgeschlagen, der den Schlitten mit definierter Kraft in den Endlagen hält. Mit dem Spannmechanismus kann der Schlitten trotz Lastwechseln spielfrei, mit einer stets ausreichenden Kraft an einen seiner beiden Endanschläge angedrückt werden und dabei ein Verstellen der Anschläge beispielsweise in einem Bereich ± 1,5 mm gewährleisten. Weiterhin wird mit dem Antrieb nicht "hart" gegen die Endanschläge gefahren, sodass ein Verklemmen der Antriebsmechanik vermieden werden kann.

### Röntgendiffraktometer und Strahlpfade

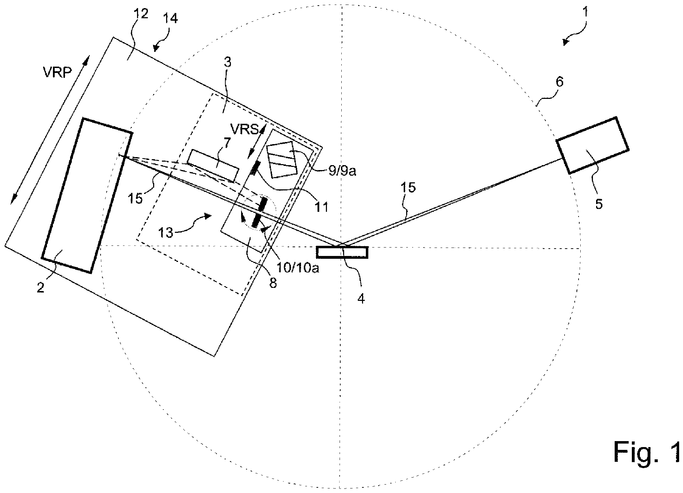

Die Fig. 1 zeigt in schematischer Ansicht eine Ausführungsform eines erfindungsgemäßen Röntgendiffraktometers 1. Dieses umfasst eine Röntgenquelle 2, etwa eine Röntgenröhre mit Cu-Anode, eine Röntgenoptik-Baugruppe 3 (gestrichelt umranded), eine Position 4 für eine zu vermessende Probe, und einen Röntgendetektor 5. Der Quellfokus der Röntgenröhre 2 (oder ggf. eine entsprechende Abbildung desselben) und der Röntgendetektor 5 (oder ggf. eine entsprechende Detektorblende) liegen auf einem Kreisbogen (Messkreis) 6 um die Position 4 der Probe. Röntgenquelle 2 und/oder Röntgendetektor 5 können in der üblichen Weise zur Vermessung einer Probe auf dem Kreisbogen 6 verfahren werden und /oder die Probe kann hierfür gedreht werden.

Die Röntgenoptik-Baugruppe 3 umfasst einen Multischicht-Spiegel 7, der hier als ein parallelisierender Goebel-Spiegel ausgebildet ist, und einen gegenüber dem Multischicht-Spiegel 7 verfahrbaren Schlitten 8. Auf dem Schlitten 8 sind ein Monochromator 9, der hier als Channel-Cut-Kristall 9a ausgebildet ist, und ein umschaltbares Blendensystem 10, das hier mit einer rotierbaren Blende 10a ausgebildet ist, angeordnet. Weiterhin ist hier auch eine Zusatzblende 11 auf dem Schlitten 8 angeordnet.

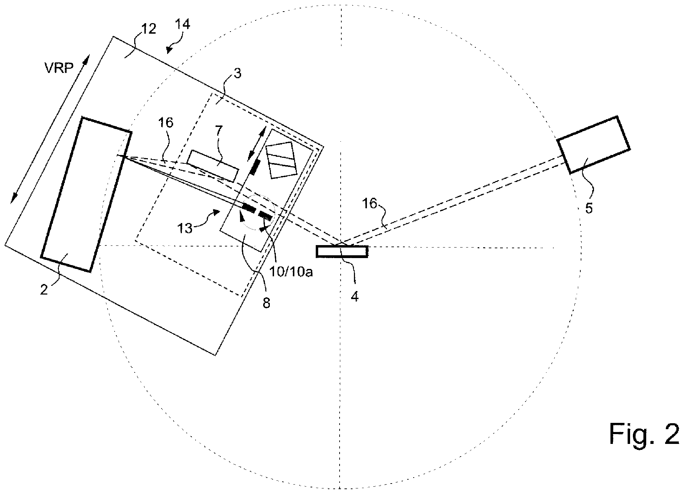

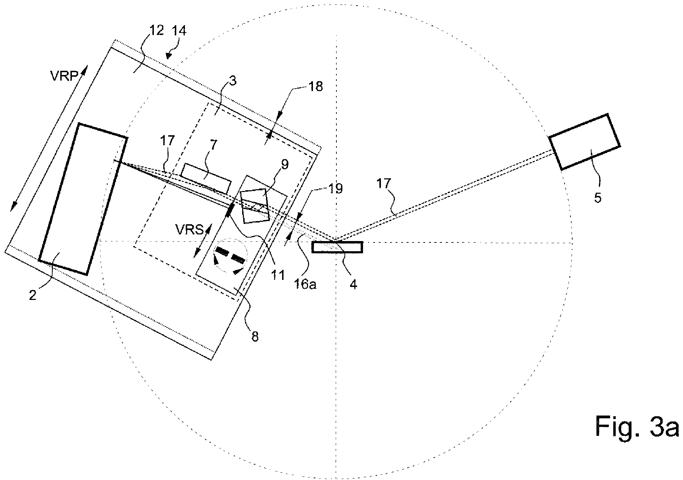

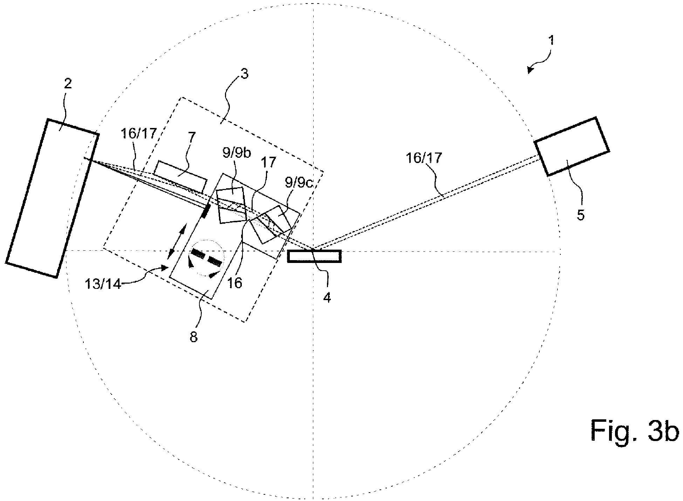

Die rotierbare Blende 10a ist zwischen einer ersten Drehstellung (wie in Fig. 1 dargestellt) und einer zweiten Drehstellung (vgl. Fig. 2 unten) verdrehbar. Der Schlitten 8 ist in einer Verfahrrichtung VRS zwischen einer ersten Verfahrposition (wie in Fig. 1 dargestellt) und einer zweiten Verfahrposition (vgl. Fig. 3a, 3b unten) verfahrbar. In der dargestellten ersten Verfahrposition befindet sich das Blendensystem 10 im Strahlengang des von der Röntgenquelle 2 ausgehenden Röntgenlichts. Durch die Drehstellung der rotierbaren Blende 10a und die Verfahrposition des Schlittens 8 wird die Stellung eines Umschaltsystems 13 der Röntgenoptik-Baugruppe 3 zur Auswahl eines Strahlpfades für die Röntgenoptik-Baugruppe 3 definiert.

In der gezeigten Ausführungsform sind weiterhin die Röntgenquelle 2 und die Röntgenoptik-Baugruppe 3 auf einem gemeinsamen Primärseiten-Schlitten 12 angeordnet, der hier in eine Verfahrrichtung VRP zwischen einer ersten Lage (wie in Fig. 1 dargestellt) und einer zweiten Lage (vgl. hierzu Fig. 3a unten) verfahrbar ist. Durch die Lage des Primärseiten-Schlittens 12 und die Stellung des Umschaltsystems 13 wird die Verstellung eines Verstellsystems 14 des Röntgendiffraktometers 1 zur Auswahl eines Strahlpfades für das Röntgendiffraktometer 1 insgesamt definiert.

In dem Fig. 1 gezeigten Situation befindet sich das Verstellsystems 14 in einer ersten Verstellung, mit dem Primärseiten-Schlitten 12 in der ersten Lage und dem Umschaltsystem 13 in einer ersten Stellung, wobei der Schlitten 8 in der hier oberen, ersten Verfahrposition ist. Von der Röntgenquelle 2 ausgehende Röntgenstrahlung eines ersten Strahlpfades 15 passiert einen mittleren Spalt der rotierbaren Röntgenblende 10a in der ersten Drehstellung; man beachte, dass durch (geringfügiges) Verdrehen der rotierbaren Blende 10a die Strahlbreite in einem gewissen Umfang eingestellt werden kann. Die Röntgenstrahlung wird sodann an der Position 4 der Probe reflektiert und entsprechend auf den Röntgendetektor 5 bzw. den Kreisbogen 6 fokussiert (Bragg-Brentano-Geometrie). Röntgenstrahlung, die am Multischichtspiegel 7 reflektiert wird, wird von einem Teil des umschaltbaren Blendensystems 10 geblockt.

In der in Fig. 2 gezeigten Situation befindet sich das Verstellsystem 14 in einer zweiten Verstellung, mit dem Primärseiten-Schlitten 12 nach wie vor in der ersten Lage, jedoch mit dem Umschaltsystem 13 in einer zweiten Stellung, wobei der Schlitten 8 in der hier oberen, ersten Verfahrposition ist. Von der Röntgenquelle 2 ausgehende Röntgenstrahlung eines zweiten Strahlpfades 16 wird am Multischicht-Spiegel 7 reflektiert und dadurch parallelisiert, und gelangt an der rotierbaren Blende 10a in einer zweiten Drehstellung vorbei zur Position 4 der Probe. Dort wird der Röntgenstrahl reflektiert und gelangt zum Röntgendetektor 5 (Parallelstrahl-Geometrie ohne Monochromator). Röntgenstrahlung, die direkt von der Röntgenquelle zum Blendensystem 10 gelangt, wird vom Blendensystem 10 blockiert.

In der in **Fig. 3a** gezeigten Situation befindet sich das Verstellsystem 14 in einer dritten Verstellung, mit dem Primärseiten-Schlitten 12 in einer zweiten Lage, die gegenüber der ersten Lage (vgl. gepunktete Schlittenkontur) geringfügig in Verfahrrichtung VRP hier nach unten verschoben ist. Weiterhin befindet sich das Umschaltsystem 13 der Röntgenoptik-Baugruppe 3 in einer dritten Stellung; der Schlitten 8 ist dafür ein eine zweite, in Verfahrrichtung VRS hier nach unten verschobene Verfahrposition verbracht worden. Von der Röntgenquelle 2 ausgehende Röntgenstrahlung eines dritten Strahlpfades 17 wird am Multischicht-Spiegel 7 reflektiert und dadurch parallelisiert, und tritt in den Monochromator 9 ein. Nach zweimaliger Refektion an den einander gegenüberliegenden, zueinander parallelen Kristallflächen des Monochromators trifft der Röntgenstrahl auf die Position 4 der Probe. Dort wird der Röntgenstrahl reflektiert und gelangt zum Röntgendetektor 5 (Parallelstrahl-Geometrie mit Monochromator). Röntgenstrahlung, die direkt von der Röntgenquelle 2 ausgeht, wird hier von der Zusatzblende 11 blockiert.

Die Verschiebung 18 des Primärseiten-Schlittens 12 gleicht einen Versatz 19 des dritten Strahlpfads 17 gegenüber einem imaginären Strahlpfad 16a (dünn gepunktet gezeichnet, ähnlich dem zweiten Strahlpfad) ohne Monochromator ausgangsseitig der Röntgenoptik-Baugruppe 3 aus, so dass die Position 4 der Probe auch mit dem dritten Strahlpfad 17 zentral getroffen wird.

**Fig. 3b** zeigt eine alternative Ausführungsform eines erfindungsgemäßen Röntgendiffraktometers 1, ähnlich wie in den Figuren 1, 2 und 3a dargestellt; es werden daher nur die wesentlichen Unterschiede näher erläutert. Bei dieser Ausführungsform umfasst das Verstellsystem 14 des Röntgendiffraktometers 1 lediglich das Umschaltsystem 13 der Röntgenoptik-Baugruppe 3; insbesondere wird kein Primärseiten-Schlitten benötigt.

In der dritten Verstellung des Verstellsystems 14 bzw. in der dritten Stellung des Umschaltsystems 13 befindet sich der Schlitten 8 wiederum in der zweiten Verfahrposition. Der am Multischicht-Spiegel 7 reflektierte und parallelisierte Röntgenstrahl des dritten Strahlpfades 17 gelangt hier in einen Monochromator 9, der einen ersten Channel-Cut-Kristall 9b und einen zweiten Channel-Cut-Kristall 9c umfasst, die hintereinander angeordnet sind (Bartels-Anordnung), so dass ein Versatz des Röntgenstrahls durch den ersten Channel-Cut-Kristall 9b durch den zweiten Channel-Cut-Kristall 9c wieder genau rückgängig gemacht wird. Die beiden Channel-Cut-Kristalle 9b, 9c sind hierfür fest zueinander orientiert, und verfahren beide mit dem Schlitten 8; typischerweise sind die beiden Channel-Cut-Kristalle 9b, 9c separat auf dem Schlitten 8 justierbar. Der dritte Strahlpfad 17 unterscheidet sich daher vom zweiten Strahlpfad 16 (dünn gepunktet dargestellt) nur über einen kleinen Abschnitt; insbesondere verlaufen der zweite Strahlpfad 16 und der dritte Strahlpfad 17 ausgangsseitig der Röntgenoptik-Baugruppe 3 gleich.

### Röntgenoptik-Baugruppe

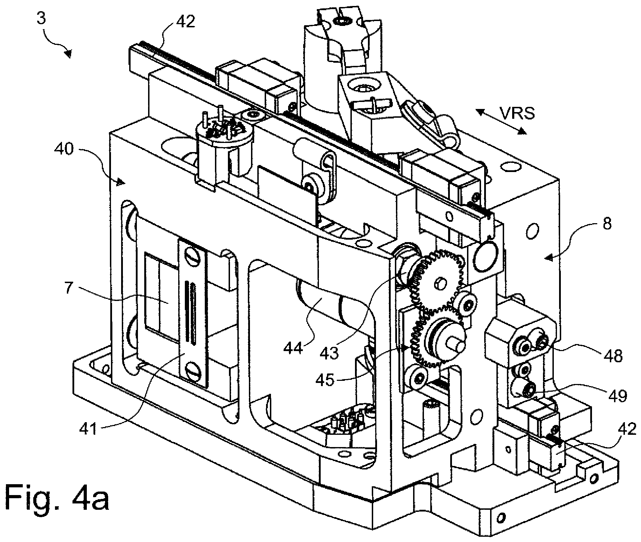

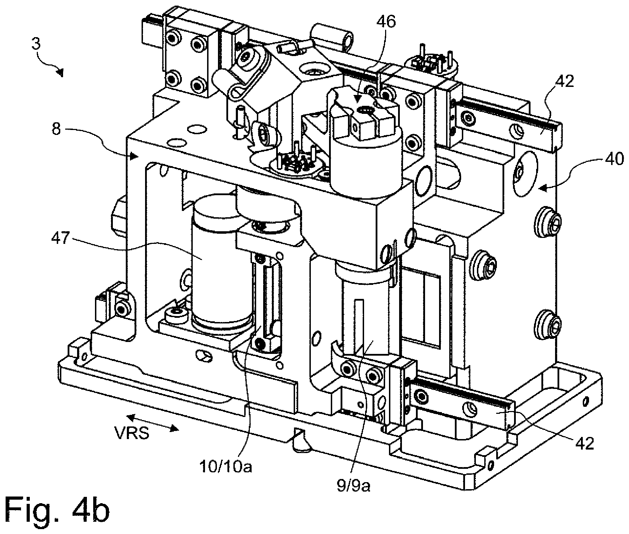

Eine Ausführungsform einer erfindungsgemäßen Röntgenoptik-Baugruppe 3, wie sie in dem Röntgendiffraktometer von Fig. 1, 2, 3a verbaut werden kann, ist in **Fig. 4a** in einer schematischen Schrägansicht mit einem Grundkörper 40 im Vordergrund und in **Fig. 4b** in einer schematischen Schrägansicht mit dem Schlitten 8 im Vordergrund dargestellt.

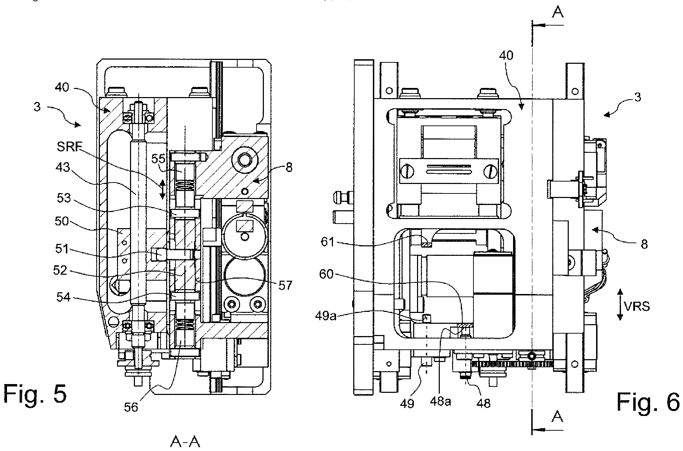

Am Grundkörper 40 ist der Multischichtspiegel 7 gelagert; eingangsseitig des Multischichtspiegels 7 ist hier noch eine Doppelschlitzblende 41 vorgesehen, mit einem Schlitz für den ersten Strahlpfad und einem weiteren Schlitzt für den zweiten und dritten Strahlpfad. Am Grundkörper 40 sind Führungen 42 ausgebildet, an denen der Schlitten 8 entlang der Verfahrrichtung VRS verfahren kann. Am Grundkörper 40 ist weiterhin eine Antriebsspindel 43 ausgebildet, die über einen Motor 44 und ein Getriebe 45 angetrieben wird. Die Antriebsspindel treibt eine Spindelmutter an, die ihrerseits an einen Führungsbolzen im Schlitten 8 gekoppelt ist (in Fig. 4a, 4b verdeckt, vgl. aber Fig. 5 unten).

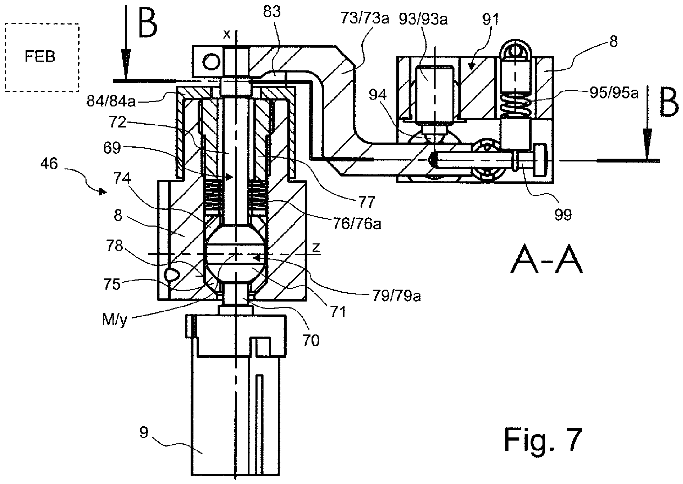

Am Schlitten 8 ist der Monochromator 9, der als Channel-Cut-Kristall 9a ausgebildet ist, über eine Justiereinheit 46 gelagert und verstellbar (größtenteils verdeckt, vgl. hierzu auch Fig. 7, Fig. 8, Fig. 9 unten). Ebenso ist am Schlitten 8 das verstellbare Blendensystem 10 angeordnet, dass hier mit einer rotierbaren Blende 10a ausgebildet ist. Über einen Motor 47 und ein (in Fig. 4a, 4b verdecktes) Getriebe kann die rotierbare Blende 10a verdreht werden.

Die Röntgenoptik-Baugruppe 3 verfügt weiterhin über zwei Feingewindespindeln 48, 49, über die verstellbare Endanschläge für den Schlitten 8 ausgebildet sind (vgl. hierzu Fig. 6 unten).

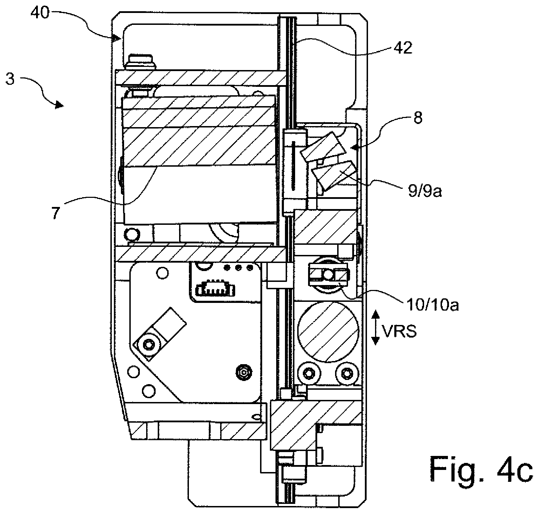

In **Fig. 4c** ist ein Querschnitt durch die Röntgenoptik-Baugruppe 3 von Fig. 4a, 4b auf Höhe der Strahlpfade dargestellt. In der darstellten zweiten Verfahrposition des Schlittens 8 an den Führungen 42 des Grundkörpers 40 kann ein Röntgenstrahl (nicht dargestellt) am Multischichtspiegel 7 reflektiert (und dadurch parallelisiert) werden, und dann durch den Channel-Cut-Kristall 9a zur Probenposition (nicht dargestellt) weiter propagieren. Die rotierbare Blende 10a ist hier aus dem Strahlengang heraus gefahren.

Die **Fig. 5** zeigt einen Querschnitt durch die Röntgenoptik-Baugruppe 3 von Fig. 4a, Fig. 4b auf Höhe der Antriebsspindel 43. Auf einem Gewinde (nicht näher dargestellt) der Antriebsspindel 43 sitzt eine Spindelmutter 50 auf, die am Grundkörper 40 drehfest geführt ist, so dass sich die Spindelmutter 50 bei Drehung der Antriebsspindel 43 entlang deren Spindelachse (in Fig. 5 von oben nach unten) bewegt.

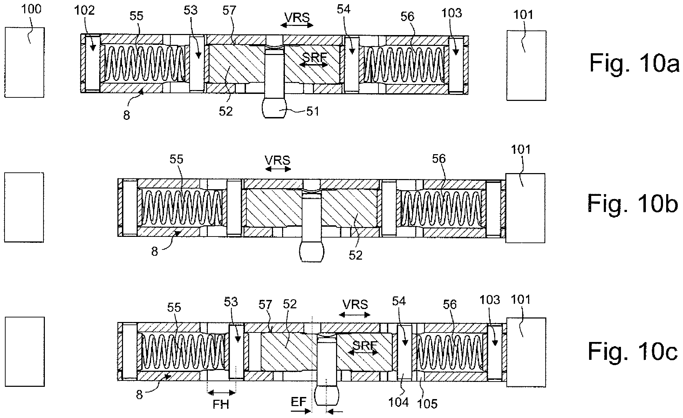

Die Spindelmutter 50 ist über einen Mitnehmer 51, der in eine Ausnehmung der Spindelmutter 50 ragt, an einen Führungsbolzen 52 gekoppelt, welcher wiederum im Schlitten 8 entlang einer Schieberichtung SRF in einer entsprechenden Bohrung 57 des Schlittens 8 verfahrbar ist. Der Mitnehmer 51 ist fest mit dem Führungsbolzen 52 verbunden und steht von diesem seitlich ab. Der Führungsbolzen 52 kann in der Bohrung 57 des Schlittens 8 gegen Anlegeelemente 53, 54, die ebenfalls in der Bohrung 57 in Schieberichtung SRF verfahrbar sind, gefahren werden. Die Anlegeelemente 53, 54 sind über erste Federelemente 55, 56 am Schlitten 8 abgestützt (mehr zum Spannmechanismus des Schlittens 8 in Fig. 10a-10c unten).

Die **Fig. 6** illustriert in einer Seitenansicht auf die Röntgenoptik-Baugruppe 3 die verstellbaren, gegenseitigen Anschläge (Endanschläge) von Grundkörper 40 und Schlitten 8 mittels der Feingewindespindeln 48, 49.

Die erste Feingewindespindel (oder Verstellschraube) 48 ist im Grundkörper 40 gelagert und begrenzt mit ihrem vorderen Ende 48a den Verfahrweg des Schlittens 8 in Fig. 6 nach unten durch Anlage an ein Anschlagelement 60 (schraffiert dargestellt), das am Schlitten 8 ausgebildet ist. Durch Ein- oder Ausschrauben der Feingewindespindel 48 kann die hier zweite Verfahrposition des Schlittens 8 gegenüber dem Grundkörper 40 definiert bzw. verändert (und damit die Position des Monochromators justiert) werden. In der gezeigten Verfahrposition des Schlittens 8 liegt das Anschlagelement 60 gerade am vorderen Ende 48a an.

Die zweite Feingewindespindel (oder Verstellschraube) 49 ist im Schlitten 8 gelagert. Ihr vorderes Ende 49a begrenzt den Verfahrweg des Schlittens 8 in Fig. 6 nach oben durch Anlage an einem Anschlagelement 61 (schraffiert dargestellt), das am Grundkörper 40 ausgebildet ist. Durch Ein- oder Ausschrauben der Feingewindespindel 49 kann die erste Verfahrposition des Schlittens 8 gegenüber dem Grundkörper 40 definiert bzw. verändert (und damit die Position der rotierbaren Blende justiert) werden. In der gezeigten Verfahrposition des Schlittens 8 ist das Anschlagelement 61 gerade weit vom vorderen Ende 49a beabstandet.

Durch die Lagerung einer Feingewindespindel 48 im Grundkörper 40 und einer Feingewindespindel 49 im Schlitten 8 ist es möglich, die Feingewindespindeln 48, 49 für beide Endanschläge an derselben (hier unteren) Seite der Röntgenoptik-Baugruppe 3 anzuordnen, was die Justage erleichtert.

In Fig. 6 ist auch die Schnittebene A der Fig. 5 eingezeichnet.

Die **Fig. 7** zeigt in einem schematischen Längsschnitt die Justiereinheit 46 der erfindungsgemäßen Röntgenoptik-Baugruppe von Fig. 4a, Fig. 4b, an der der Monochromator 9 gehalten ist. Die Justiereinheit 46 umfasst einen ersten Verbindungsabschnitt 70 vom Monochromator 9 zu einem Kugelabschnitt 71 der Justiereinheit 46, mit dem diese gelagert ist. Weiterhin ist ein zweiter Verbindungsabschnitt 72 vorgesehen, der vom Kugelabschnitt 71 zur Befestigung eines Justierelements 73 der Justiereinheit 46 führt; die Verbindungsabschnitte 70, 72 liegen einander gegenüber und verlaufen koaxial, mit dem Mittelpunkt M des Kugelabschnitts 71 auf ihrer gemeinsamen Bauteileachse. Die Verbindungsabschnitte 70, 72 und der Kugelabschnitt 71 werden insgesamt auch als Halteelement 69 bezeichnet. Das Justierelement 73 ist hier als ein seitlich abstehender Justierhebel 73a ausgeführt. Der Kugelabschnitt 71 und großteils auch die Verbindungsabschnitte 70, 72 verlaufen in einer Bohrung 78 des Schlittens 8.

Der Kugelabschnitt 71 ist zwischen zwei einander gegenüberliegenden Gelenkpfannen-Elementen 74, 75 hier in Form von angeschrägten, gelochten Kunststoffscheiben eingeklemmt. Das untere Gelenkpfannen-Element 75 liegt hier am unteren Ende der Bohrung 78 am Schlitten 8 an, und das obere Gelenkpfannen-Element 74 wird mittels zweiter Federelemente 76, hier mehreren gestapelt angeordneten Tellerfeldern 76a, auf den Kugelabschnitt 71 zu gepresst, so dass der Kugelabschnitt 71 zwischen den Gelenkpfannen-Elementen 74, 75 praktisch spielfrei gehalten ist. Die Tellerfedern 76a stützen sich an einer in die Bohrung 78 eingepressten, unbeweglichen Fixierhülse 77 ab.

Durch das mit dem Kugelabschnitt 71 und den Gelenkpfannenelementen 74, 75 ausgebildete Gelenk 79, nämlich Kugelgelenk 79a, könnte der Monochromator 9 grundsätzlich bezüglich dreier orthogonaler Achsen x, y, z, die durch den Mittelpunkt M des Kugelabschnitts 71 verlaufen, mittels der Justiereinheit 46 gedreht bzw. verschwenkt werden (drei Freiheitsgrade).

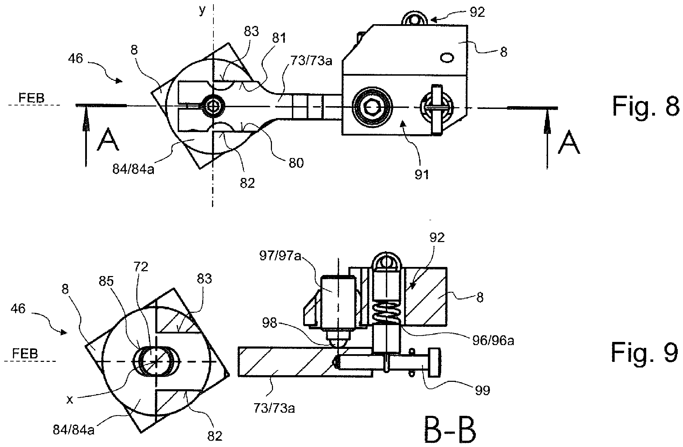

Erfindungsgemäß ist ein Freiheitsgrad, in der gezeigten Bauform von Fig. 7 die Drehung um die z-Achse, blockiert, wie auch aus der Aufsicht von **Fig. 8** und der gestuften Schnittdarstellung von **Fig. 9** (vgl. Schnittebene B in Fig. 7) deutlich wird.

An einander gegenüberliegenden, zueinander parallelen Seitenflächen 80, 81 des Justierhebels 73a liegen einander gegenüberliegende, zueinander parallele Führungsabschnitte 82, 83 einer Führungsanordnung 84 an, die hier als eine Sperrhülse 84a ausgebildet ist. Entlang der Führungsabschnitte 82, 83 kann der Justierhebel 73a bzw. die Justiereinheit 46 parallel zu einer Führungsebene FEB bzw. um die y-Achse verschwenkt werden; die y-Achse verläuft senkrecht zur Führungsebene FEB.

Die Sperrhülse 84a ist ihrerseits um die x-Achse drehbar am Schlitten 8 gelagert. Entsprechend kann der Justierhebel 73a bzw. die Justiereinheit 46 insgesamt um die x-Achse verschwenkt werden; die x-Achse verläuft parallel zur Führungsebene FEB. Die Seitenflächen 80, 81, die in Richtung der z-Achse neben (beabstandet von) der x-Achse liegen, nehmen dabei die Führungsanordnung 84 mit.

Jedoch blockiert die Führungsanordnung 84 mit den Führungsabschnitten 82, 83 eine Verschwenkung der Justiereinheit 46 um die z-Achse. Die Führungsabschnitte 82, 83 sind dabei (hier in Richtung der x-Achse) von der z-Achse beabstandet.

Man beachte, dass hier weiterhin der zweite Verbindungsabschnitt 72 mit kreisförmigem Querschnitt durch ein Langloch 85 der Sperrhülse 84a ragt, das in Richtung der z-Achse langgestreckt ist, und am zweiten Verbindungsabschnitt 72 zweiseitig anliegt. Dadurch wird die Justiereinheit 46 zusätzlich geführt.

Anhand von Fig. 7, Fig. 8 und Fig. 8 können auch eine erste Justiermechanik 91 und eine zweite Justiermechanik 92 ersehen werden.

Die erste Justiermechanik 91, besonders gut in Fig. 7 ersichtlich, verfügt über ein drittes Federelement 95, das hier als Zugfeder 95a ausgebildet ist, und das den Justierhebel 73a über eine Verlängerungsschraube 99 an einen verstellbaren Justieranschlag 93, hier eine Gewindespindel 93a, am Schlitten 8 zieht. Durch Verstellung der Gewindespindel 93a kann der untere, ausgreifende Teil des Justierhebels 73a im Wesentlichen parallel zur x-Achse verfahren werden, wodurch eine Drehung der Justiereinheit 46 um die y-Achse bewirkt wird. Man beachte, dass das untere Ende 94 der Gewindespindel 93a hier kugelig ausgebildet ist, um ein gegenseitiges Abgleiten von Gewindespindel 93a und Justierhebel 73a zu erleichtern, wenn dieser verschwenkt wird.

Die zweite Justiermechanik 92, besonders gut in Fig. 9 ersichtlich, verfügt über ein drittes Federelement 96, das hier als Zugfeder 96a ausgebildet ist, und das den Justierhebel 73a über die Verlängerungsschraube 99 an einen verstellbaren Justieranschlag 97, hier eine Gewindespindel 97a, am Schlitten 8 zieht. Durch Verstellung der Gewindespindel 97a kann der untere, ausgreifende Teil des Justierhebels 73a im Wesentlichen parallel zur y-Achse verfahren werden, wodurch eine Drehung der Justiereinheit 46 um die x-Achse bewirkt wird. Man beachte, dass das vordere Ende 98 der Gewindespindel 97a hier kugelig ausgebildet ist, um ein gegenseitiges Abgleiten von Gewindespindel 97a und Justierhebel 73a zu erleichtern, wenn dieser verschwenkt wird.

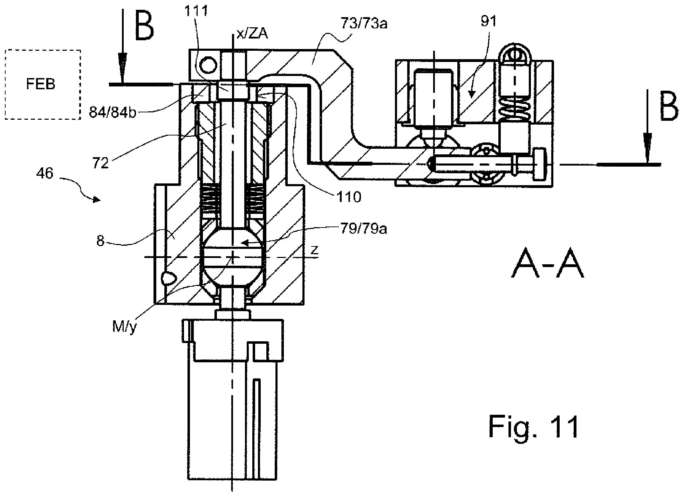

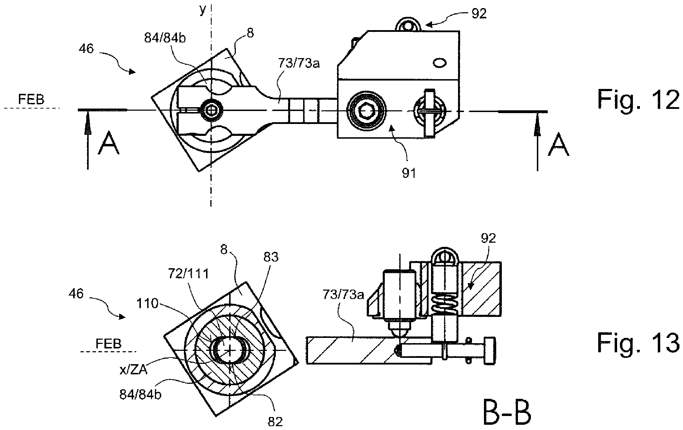

Eine alternative Ausgestaltung der Führungsanordnung 84 für ein Justierelement 46 ist in den **Fig. 11** (im Längsschnitt), **Fig. 12** (in Aufsicht) und **Fig. 13** (im gestuften Querschnitt, vgl. Ebene B in Fig. 11) dargestellt, die weitgehend den Darstellungen von Fig. 7, Fig. 8 und Fig. 9 entsprechend, so dass hier nur die wesentlichen Unterschiede diskutiert werden.

Die Führungsanordnung 84 ist hier als eine im Schlitten 8 drehfeste Sperrscheibe 84b ausgebildet, die mit einem Langloch 110 ausgebildet ist. Das Langloch 110 erstreckt sich in einer Richtung parallel zur z-Achse. Die einander gegenüberliegenden, parallelen Längsseiten des Langlochs 110 bilden Führungsabschnitte 82, 83 aus, die an einem kreiszylindrischen Bereich 111 der Justiereinheit 46 beidseitig anliegen. Man beachte, dass es genügt, wenn die Justiereinheit 46 mit zwei ausreichend großen Kreiszylindermantelflächenabschnitten an den Führungsabschnitten 82, 83 anliegt, jedoch ist meist ein umlaufender kreiszylindrischer Bereich 111 (in dem die notwendigen Kreiszylindermantelflächenabschnitte integriert sind) einfacher zu fertigen. Der kreiszylindrische Bereich 111 ist hier am zweiten Verbindungsabschnitt 72 ausgebildet. Eine Zylinderachse ZA des kreiszylindrischen Bereichs 111 verläuft koaxial mit der x-Achse.

Die Justiereinheit 46 ist im Langloch 111 entlang der Führungsabschnitte 82, 83 parallel zur Führungsebene FEB, also um die y-Achse, verschwenkbar. Weiterhin ist die Justiereinheit 46 um die x-Achse bzw. um die Zylinderachse ZA drehbar. Hingegen ist eine Verschwenkung um die z-Achse durch die Anlage der Justiereinheit 46 an den Führungsabschnitten 82, 83, die (hier in x-Richtung) von der z-Achse beabstandet sind, gesperrt.

Die Betätigung des Justierelements 73, die hier wiederum als Justierhebel ausgebildet ist, kann in gleicher Weise mit Justiermechaniken 91, 92 wie in Fig. 7, Fig. 8 und Fig. 9 dargestellt erfolgen.

Die Figuren 10a-10c illustrieren einen Spannmechanismus, mit dem der Schlitten 8 der erfindungsgemäßen Röntgenoptik-Baugruppe von Fig. 4a, 4b zwischen Endanschlägen 100, 101 entlang einer Verfahrrichtung VRS gegenüber dem Grundkörper verfahren werden kann. Man beachte, dass die Endanschläge 100, 101 beispielsweise über Feingewindespindeln 48, 49 ausgebildet sind, und in Fig. 10a-10c nur schematisch dargestellt sind.

Die **Fig. 10a** zeigt zunächst den Schlitten 8 in einer Mittelstellung. In der Bohrung 57 des Schlittens 8 ist der Führungsbolzen 52 entlang einer Schieberichtung SRF verschiebbar, die parallel zur Verfahrrichtung VRS des Schlittens 8 verläuft. In der Bohrung 57 sind weiterhin die ersten Federelemente 55, 56 angeordnet, die zwischen im Schlitten 8 festen Endelementen 102, 103 und den in Schieberichtung SRF verfahrbaren Anlageelementen 53, 54 eingespannt sind. In der gezeigten Mittelstellung drücken die Anlageelemente 53, 54 axial von beiden Seiten leicht gegen den Führungsbolzen 52; die ersten Federelemente 55, 56 befinden sich in ihrer nahezu entspannten Stellung. Der Führungsbolzen 52 verfügt über den in Fig. 10a nach unten herausragenden Mitnehmer 51, mit dem Kraft auf den Führungsbolzen 52 von der Antriebsspindel (nicht dargestellt, vgl. hierzu Fig. 5) übertragen werden kann bzw. mit dem der Führungsbolzen 52 in Schieberichtung SRF bewegt werden kann.

Wird nun der Führungsbolzen 52 mittels der Antriebsspindel beispielsweise nach rechts verschoben, wird der Schlitten 8 zunächst in Verfahrrichtung VRS einfach mitgenommen, und mangels eines Widerstands für den Schlitten 8 bleiben die ersten Federelemente 55, 56 und die Position des Führungsbolzens 52 im Schlitten 8 im Wesentlichen unverändert, bis der Schlitten 8 schließlich den Endanschlag 101 gerade erreicht (Zwischenstellung, vgl. **Fig. 10b**).

Um eine spielfreie, präzise Positionierung des Schlittens 8 am Endanschlag 110 zu erreichen, wird der Führungsbolzen 52 nach Erreichen des Endanschlags 101 noch ein wenig weiter auf den Endanschlag 101 zu verfahren, vgl. den Einfederweg EF in **Fig. 10c** (verspannte Stellung). Dabei kann sich nur noch der Führungsbolzen 52 in der Bohrung 57 des Schlittens 8 in Schieberichtung SRF bewegen, nicht mehr aber der Schlitten 8 in Verfahrrichtung VRS. Der Führungsbolzen 52 schiebt das Anlageelement 54 nach rechts, und das rechtsseitige erste Federelement 56 wird gegen seine Federkraft zusammengedrückt. Entsprechend der Federkraft des ersten Federelements 56 wird der Schlitten 8 über das Endelement 103 gegen den Endanschlag 101 gepresst. Die Federkraft (bzw. Anpresskraft) ist dabei von der Federkonstante des ersten Federelements 56 abhängig und weiterhin näherungsweise proportional zum Einfederweg EF.

Sollte der Einfederweg EF nicht genau reproduzierbar sein, etwa wegen eines Spiels in der Antriebsspindel, so verändert das nur geringfügig die Anpresskraft, mit der der Schlitten 8 an den Endanschlag 101 angedrückt ist, und eine spielfreie Anlage des Schlittens 8 am Endanschlag 101 wird dennoch gehalten. Auch eine geringfügige Veränderung des Federwegs EF durch eine Feinjustage der Position des Endanschlags 101 (im Falle eines verstellbaren Endanschlags) hat keine Auswirkung auf den spielfreien Halt des Schlittens am Endanschlag 101.

Man beachte, dass die Anlageelemente 53, 54 in der gezeigten Ausführungsform mittels Querbolzen 104 in ihrem Verfahrweg im Schlitten 8 durch Langlöcher 105 begrenzt werden, insbesondere auf den Führungsbolzen 52 zu ("Sperrelemente" 53, 54). Das Anlageelement 53 verliert den Kontakt zum Führungsbolzen 52 durch einen führungsbolzenseitigen Sperranschlag bereits dann, wenn ein kleiner Teil (typischerweise weniger als 20%) des Einfederwegs EF durch den Führungsbolzen 52 zurückgelegt ist. Dadurch wird eine gegenseitige Aufhebung der Wirkungen der Federelemente 55, 56 beim Verfahren des Führungsbolzens 52 weitgehend verhindert.

Der Einfederweg EF wird typischerweise näherungsweise so gewählt bzw. geplant (etwa durch die Steuerung der Antriebsspindel), dass dieser ca. die Hälfte des aufgrund der Langlöcher 105 zur Verfügung stehenden Federhubs FH beträgt, um eine möglichst große Toleranz bei der (tatsächlichen) Einstellung des Einfederwegs EF zur Verfügung zu haben. Bevorzugt sind der Federhub FH und der Einfederweg EF so ausgelegt, dass sich der Schlitten 8 in Endlage (am Endanschlag 100, 101) um bis zu ± 1,5 mm verstellen lässt und dabei immer noch genug Andruckkraft auf den Schlitten 8 wirkt; hierfür kann beispielsweise der Federhub FH wenigstens 4,0 mm betragen, und der Einfederweg EF zu wenigstens 2,0 mm gewählt sein.

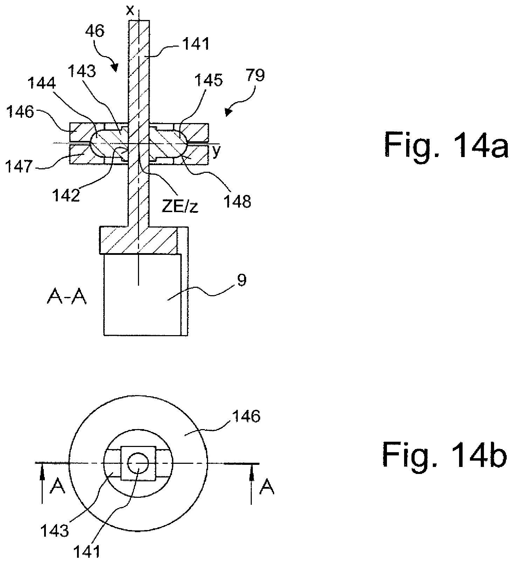

In **Fig. 14a** (im Längsschnitt) und **Fig. 14b** (in Aufsicht) wird eine alternative Bauform eines Gelenks 79 einer Justiereinheit 46, die unterenends einen Monochromator 9 hält, illustriert. Bei diesem Gelenk 79 ist ein Halteelement 141 fest in der Bohrung 142 eines Gelenkstifts 143 gehalten. Der Gelenkstift 143 verfügt über kugelförmig abgerundete Enden 144, 145 und ist zwischen zwei Scheibenringen 146, 147 anliegend gehalten (eingeklemmt), die ihrerseits am Schlitten (nicht dargestellt) befestigt sind. Die Scheibenringe 146, 147 weisen jeweils an ihrer dem Gelenkstift 143 zugewandten Seite eine umlaufende, im Querschnitt kreisbogenförmige Ausfräsung 148 auf.

Entsprechend kann sich die Justiereinheit 46 um die entlang der Achse des Halteelements 141 verlaufenden x-Achse drehen, und auch um die y-Achse, die entlang der Achse des Gelenkstifts 143 verläuft, drehen. Blockiert ist jedoch eine Verschwenkung um die z-Achse (senkrecht zur Zeichenebene, durch das Zentrum ZE des Gelenkstifts 143).

Am oberen Ende des Halteelements 141 kann ein Justierelement befestigt werden, etwa ein Justierhebel (nicht dargestellt).

## Patentansprüche

1. Röntgenoptik-Baugruppe (3) für ein Röntgendiffraktometer (1), umfassend einen Multischichtspiegel (7), insbesondere Goebel-Spiegel, und ein Umschaltsystem (13), mit dem Strahlpfade (15; 16; 17) für einen Röntgenstrahl auswählbar sind,
wobei die Röntgenoptik-Baugruppe (3) weiterhin einen Monochromator (9), insbesondere einen Channel-Cut-Kristall (9a), umfasst,
wobei mit dem Umschaltsystem (13) drei Strahlpfade (15; 16; 17) für den Röntgenstrahl auswählbar sind,
wobei ein erster Strahlpfad (15) in einer ersten Stellung des Umschaltsystems (13) am Multischichtspiegel (7) vorbei führt und am Monochromator (9) vorbei führt,
wobei ein zweiter Strahlpfad (16) in einer zweiten Stellung des Umschaltsystems (13) den Multischichtspiegel (7) enthält und am Monochromator (9) vorbei führt,
und wobei ein dritter Strahlpfad (17) in einer dritten Stellung des Umschaltsystems (13) den Multischichtspiegel (7) enthält und den Monochromator (9) enthält,
**dadurch gekennzeichnet,**
**dass** der Monochromator (9) an einer Justiereinheit (46) befestigt ist, die mit einem in zwei Freiheitsgraden drehbaren Gelenk (79) gelagert ist, dass das drehbare Gelenk (79) als ein Kugelgelenk (79a) ausgebildet ist, dass eine Führungsanordnung (84) mit zwei einander gegenüberliegenden Führungsabschnitten (82, 83) vorgesehen ist, zwischen denen die Justiereinheit (46) anliegend geführt ist, so dass die Justiereinheit (46) parallel zu einer Führungsebene (FEB), die parallel zu den Führungsabschnitten (82, 83) liegt, um eine erste Achse (y), die durch den Mittelpunkt (M) des Kugelgelenks (79a) und senkrecht zur Führungsebene (FEB) verläuft, verschwenkbar ist,
**dass** weiterhin die Justiereinheit (46) um eine zweite Achse (x), die durch den Mittelpunkt (M) des Kugelgelenks (79a) und senkrecht zur ersten Achse (y) verläuft, drehbar ist,
und **dass** die Justiereinheit (46) bezüglich der Richtung der zweiten Achse (x) beabstandet vom Mittelpunkt (M) des Kugelgelenks (79a) an den Führungsabschnitten (82, 83) anliegt, so dass ein Verschwenken der Justiereinheit (46) um eine dritte Achse (z), die durch den Mittelpunkt (M) des Kugelgelenks (79a) und senkrecht zur ersten Achse (y) und senkrecht zur zweiten Achse (x) verläuft, blockiert ist.

2. Röntgenoptik-Baugruppe (3) nach Anspruch 1, **dadurch gekennzeichnet,**
**dass** das Umschaltsystem (13) einen gegenüber dem Multischichtspiegel (7) verfahrbaren Schlitten (8) und ein umschaltbares Blendensystem (10) aufweist,
wobei das umschaltbare Blendensystem (10) und der Monochromator (9) auf dem Schlitten (8) angeordnet sind,
und **dass** durch Verfahren des Schlittens (8) wahlweise
- das umschaltbare Blendensystem (10) zur Auswahl des ersten oder zweiten Strahlpfades (15; 16)
- oder der Monochromator (9) zur Auswahl des dritten Strahlpfades (17) im Röntgenstrahl anordenbar ist.

3. Röntgenoptik-Baugruppe (3) nach Anspruch 2, **dadurch gekennzeichnet, dass** der Schlitten (8) an einem Grundkörper (40) der Röntgenoptik-Baugruppe (3) mit Führungen (42) zwischen zwei Endanschlägen (100, 101) verfahrbar ist, insbesondere wobei die zwei Endanschläge (100, 101) verstellbar ausgebildet sind.

4. Röntgenoptik-Baugruppe (3) nach Anspruch 3, **dadurch gekennzeichnet, dass** am oder im Schlitten (8) ein Führungsbolzen (52) geführt ist, der parallel zu einer Verfahrrichtung (VRS) des Schlittens (8) entlang einer Schieberichtung (SRF) gegenüber dem Schlitten (8) verfahrbar ist, und dass in Schieberichtung (SRF) beiderseits des Führungsbolzens (52) am oder im Schlitten (8) jeweils ein Anlageelement (53, 54) ausgebildet ist, das parallel zur Schieberichtung (SRF) am oder im Schlitten (8) verfahrbar ist und über ein jeweiliges erstes Federelement (55, 56) am Schlitten (8) abgestützt ist.

5. Röntgenoptik-Baugruppe (3) nach Anspruch 4, **dadurch gekennzeichnet, dass** am Grundkörper (40) der Röntgenoptik-Baugruppe (3) eine Antriebsspindel (43) ausgebildet ist, auf der eine am Grundkörper (40) geführte Spindelmutter (50) aufsitzt, und dass der Führungsbolzen (52) an die Spindelmutter (50) gekoppelt ist, insbesondere über einen vom Führungsbolzen (52) seitlich abstehenden Mitnehmer (51).

6. Röntgenoptik-Baugruppe (3) nach einem der vorhergehenden Ansprüche, **dadurch gekennzeichnet, dass** die Justiereinheit (46) ein Halteelement (69) und ein Justierelement (73) umfasst, wobei das Halteelement (69) einen Kugelabschnitt (71), einen ersten Verbindungsabschnitt (70) vom Kugelabschnitt (71) zum Monochromator (9), und einen zweiten Verbindungsabschnitt (72) vom Kugelabschnitt (71) zum Justierelement (73) aufweist.

7. Röntgenoptik-Baugruppe (3) nach einem der vorhergehenden Ansprüche, **dadurch gekennzeichnet, dass** die Justiereinheit (46) mit einem Kugelabschnitt (71) ausgebildet ist, wobei der Kugelabschnitt (71) zwischen zwei Gelenkpfannen-Elementen (74, 75) angeordnet ist, insbesondere wobei die Gelenkpfannen-Elemente (74, 75) als gelochte Kunststoffscheiben ausgebildet sind,
und dass die Gelenkpfannen-Elemente (74, 75) mittels eines oder mehrerer zweiter Federelemente (76), insbesondere Tellerfedern (76a), aufeinander zu vorgespannt sind.

8. Röntgenoptik-Baugruppe (3) nach einem der Ansprüche 1 bis 7, **dadurch gekennzeichnet, dass** die Führungsanordnung (84) drehbar um die zweite Achse (x) ausgebildet ist, wobei die Justiereinheit (46) bezüglich der Richtung der dritten Achse (z) beabstandet vom Mittelpunkt (M) des Kugelgelenks (79a) an den Führungsabschnitten (82, 83) anliegt, so dass die Justiereinheit (46) bei Drehung um die zweite Achse (x) die Führungsanordnung (84) mitdreht,
insbesondere wobei die Führungsanordnung (84) mit einer Sperrhülse (84a) ausgebildet ist.

9. Röntgenoptik-Baugruppe (3) nach einem der Ansprüche 1 bis 7, **dadurch gekennzeichnet,**
**dass** die Führungsanordnung (84) drehfest ausgebildet ist,
**dass** die Justiereinheit (46) mit Kreiszylindermantelflächenabschnitten an den Führungsabschnitten (82, 83) anliegt, wobei eine gemeinsame Zylinderachse (ZA) der Kreiszylindermantelflächenabschnitte durch den Mittelpunkt (M) des Kugelgelenks (79a) verläuft, so dass bei Drehung der Justiereinheit (46) um die zweite Achse (x) sich die Justiereinheit (46) gegenüber Führungsanordnung (84) um die gemeinsame Zylinderachse (ZA) dreht,
insbesondere wobei die Führungsanordnung (84) die Justiereinheit (46) in einem kreiszylindrischen Bereich (111) führt.

10. Röntgenoptik-Baugruppe (3) nach einem der vorhergehenden Ansprüche, **dadurch gekennzeichnet, dass** eine erste Justiermechanik (91) zum Verschwenken der Justiereinheit (46) um eine erste Achse (y) und eine zweite Justiermechanik (92) zum Drehen der Justiereinheit (46) um eine zweite Achse (x) vorhanden sind.

11. Röntgenoptik-Baugruppe (3) nach Anspruch 10, **dadurch gekennzeichnet, dass** die Justiereinheit (46) einen im Wesentlichen quer zur zweiten Achse (x) ausgreifenden Justierhebel (73a) aufweist, an dem die erste und die zweite Justiermechanik (91, 92) angreifen,
dass der Justierhebel (73a) mit der ersten Justiermechanik (91) in einer Richtung näherungsweise parallel zur zweiten Achse (x) auslenkbar ist, und dass der Justierhebel (73a) mit der zweiten Justiermechanik (92) in einer Richtung näherungsweise parallel zur ersten Achse (y) auslenkbar ist.

12. Röntgenoptik-Baugruppe (3) nach Anspruch 10 oder 11, **dadurch gekennzeichnet, dass** die erste Justiermechanik (91) und die zweite Justiermechanik (92) jeweils die Justiereinheit (46) mit der Kraft eines jeweiligen dritten Federelements (95; 96), insbesondere einer Zugfeder (95a; 96a), an einen verstellbaren Justieranschlag (93; 97), insbesondere eine Gewindespindel (93a; 97a) oder Verstellschraube, pressen.

13. Röntgendiffraktometer (1), umfassend
- eine Röntgenquelle (2),
- eine Position (4) für eine Probe,
- einen Röntgendetektor (5), der auf einem Kreisbogen (6) um die Position (4) der Probe verfahrbar ist,
- und ein Verstellsystem (14), mit dem Strahlpfade (15; 16; 17) für einen Röntgenstrahl auswählbar sind,
wobei das Röntgendiffraktometer (1) weiterhin eine Röntgenoptik-Baugruppe (3) nach einem der vorhergehenden Ansprüche umfasst, wobei das Verstellsystem (14) des Röntgendiffraktometers (1) zumindest das Umschaltsystem (13) der Röntgenoptik-Baugruppe (3) umfasst, und wobei
- der erste Strahlpfad (15) in einer ersten Verstellung des Verstellsystems (14) mit dem Umschaltsystem (13) in der ersten Stellung,
- weiterhin der zweite Strahlpfad (16) in einer zweiten Verstellung des Verstellsystems (14) mit dem Umschaltsystem (13) in der zweiten Stellung,
- und weiterhin der dritte Strahlpfad (17) in einer dritten Verstellung des Verstellsystems (14) mit dem Umschaltsystem (13) in der dritten Stellung,
jeweils den Röntgenstrahl von der Röntgenquelle (2) auf die Position (4) der Probe richten.

14. Röntgendiffraktometer (1) nach Anspruch 13, **dadurch gekennzeichnet, dass** das Verstellsystem (14) weiterhin einen Primärseiten-Schlitten (12) umfasst, auf dem zumindest die Röntgenquelle (2) und die Röntgenoptik-Baugruppe (3) angeordnet sind, und der zumindest zwischen einer ersten Lage und einer zweiten Lage verfahren und/oder verschwenkt werden kann,
insbesondere wobei ein Lageunterschied (18) zwischen der zweiten Lage und der ersten Lage des Primärseiten-Schlittens (12) eine Röntgenstrahländerung (19) durch den Monochromator (9) im dritten Strahlpfad (17) gegenüber dem zweiten Strahlpfad (16) ausgleicht.

15. Röntgendiffraktometer (1) nach Anspruch 13, **dadurch gekennzeichnet, dass** der Monochromator (9) so ausgebildet ist, dass der zweite Strahlpfad (16) und der dritte Strahlpfad (17) ausgangsseitig der Röntgenoptik-Baugruppe (3) relativ zur Röntgenoptik-Baugruppe (3) identisch verlaufen, insbesondere wobei der Monochromator (9) hintereinander zwei Channel-Cut-Kristalle (9b, 9c) in Bartels-Anordnung umfasst,
und dass das Verstellsystem (14) lediglich das Umschaltsystem (13) der Röntgenoptik-Baugruppe (3) umfasst.

16. Röntgendiffraktometer (1) nach einem der Ansprüche 13 bis 15, **dadurch gekennzeichnet, dass** der erste Strahlpfad (15) in einer Bragg-Brentano-Geometrie den Röntgenstrahl nach Reflexion an der Position (4) der Probe auf den Kreisbogen (6) fokussiert,
und dass der zweite Strahlpfad (16) und der dritte Strahlpfad (17) jeweils in einer Parallelstrahlgeometrie den Röntgenstrahl auf die Position (4) der Probe richten.

17. Röntgendiffraktometer(1) nach einem der Ansprüche 13 bis 15, **dadurch gekennzeichnet, dass** der erste Strahlpfad (15) in einer Bragg-Brentano-Geometrie den Röntgenstrahl nach Reflexion an der Position (4) der Probe auf den Kreisbogen (6) fokussiert,
dass der zweite Strahlpfad (16) in einer Parallelstrahlgeometrie den Röntgenstrahl auf die Position (4) der Probe richtet,
und dass der dritte Strahlpfad (17) den Röntgenstrahl durch die Position (4) der Probe hindurch auf den Kreisbogen (6) fokussiert,
insbesondere wobei der Monochromator (9) einen Johansson-Monochromator umfasst.

## Claims

1. An X-ray optics assembly (3) for an X-ray diffractometer (1),
comprising a multilayer mirror (7), in particular a Goebel mirror, and a switching system (13) with which beam paths (15; 16; 17) for an X-ray beam are selectable,
wherein the X-ray optics assembly (3) also includes a monochromator (9), in particular a channel-cut crystal (9a), wherein
three beam paths (15; 16; 17) for the X-ray beam are selectable using the switching system (13),
wherein a first beam path (15) in a first position of the switching system (13) leads past the multilayer mirror (7) and leads past the monochromator (9),
wherein a second beam path (16) in a second position of the switching system (13) contains the multilayer mirror (7) and leads past the monochromator (9), and
wherein a third beam path (17) in a third position of the switching system (13) contains the multilayer mirror (7) and contains the monochromator (9),
**characterized in**
**that** the monochromator (9) is fastened to an adjustment unit (46) which is supported via an articulated joint (79) that is rotatable with at least two degrees of freedom,
**that** the rotatable articulated joint (79) is designed as a ball joint (79a), that a guide arrangement (84) having two mutually facing guide sections (82, 83) is provided, between which the adjustment unit (46) is guided with contact, so that the adjustment unit (46) is pivotable about a first axis (y) which extends through the midpoint (M) of the ball joint (79a) and perpendicularly with respect to a guide plane (FEB), in parallel to the guide plane (FEB) which is parallel to the guide sections (82, 83),
in addition the adjustment unit (46) is rotatable about a second axis (x) which extends through the midpoint (M) of the ball joint (79a) and perpendicularly with respect to the first axis (y), and
the adjustment unit (46) rests against the guide sections (82, 83) at a distance from the midpoint (M) of the ball joint (79a) with respect to the direction of the second axis (x), so that pivoting of the adjustment unit (46) about a third axis (z) which extends through the midpoint (M) of the ball joint (79a) and perpendicularly with respect to the first axis (y) and perpendicularly with respect to the second axis (x) is blocked.

2. The X-ray optics assembly (3) according to claim 1, **characterized in that** the switching system (13) has a carriage (8) which is movable relative to the multilayer mirror (7), and a switchable aperture system (10), wherein the switchable aperture system (10) and the monochromator (9) are situated on the carriage (8),
and that by moving the carriage (8)
- the switchable aperture system (10) can selectively be arranged in the X-ray beam in order to select the first or second beam path (15; 16),
- or the monochromator (9) can selectively be arranged in the X-ray beam in order to select the third beam path (17).

3. The X-ray optics assembly (3) according to claim 2, **characterized in that** the carriage (8) is movable, via guides (42), between two end stops (100, 101) on a base body (40) of the X-ray optics assembly (3), in particular the two end stops (100, 101) having a displaceable design.

4. The X-ray optics assembly (3) according to Claim 3, **characterized in that** a guide bolt (52) is guided on or in the carriage (8), and is movable with respect to the carriage (8) along a sliding direction (SRF), in parallel to a travel direction (VRS) of the carriage (8), and
a contact element (53, 54) is formed on or in the carriage (8) in the sliding direction (SRF) on both sides of the guide bolt (52), and is movable on or in the carriage (8) in parallel to the sliding direction (SRF) and supported on the carriage (8) via a respective first spring element (55, 56).

5. The X-ray optics assembly (3) according to Claim 4, **characterized in that** a drive spindle (43), on which a spindle nut (50) that is guided on the base body (40) rests, is provided on the base body (40) of the X-ray optics assembly (3), and the guide bolt (52) is coupled to the spindle nut (50), in particular via a carrier (51) which protrudes laterally from the guide bolt (52).

6. The X-ray optics assembly (3) according to one of the preceding claims, **characterized in that in that** the adjustment unit (46) includes a retaining element (69) and an adjustment element (73), the retaining element (69) having a ball section (71), a first connecting section (70) from the ball section (71) to the monochromator (9), and a second connecting section (72) from the ball section (71) to the adjustment element (73).

7. The X-ray optics assembly (3) according to one of the preceding claims, **characterized in that** the adjustment unit (46) is provided with a ball section (71), the ball section (71) being situated between two joint socket elements (74, 75), in particular the joint socket elements (74, 75) being designed as perforated plastic disks,
and the joint socket elements (74, 75) are pretensioned with respect to one another by means of one or more second spring elements (76), in particular disk springs (76a).

8. The X-ray optics assembly (3) according to one of the claims 1 to 7, **characterized in that** the guide arrangement (84) is designed to be rotatable about the second axis (x), the adjustment unit (46) resting against the guide sections (82, 83) at a distance from the midpoint (M) of the ball joint (79a) with respect to the direction of the third axis (z), so that when the adjustment unit (46) rotates about the second axis (x), it also turns the guide arrangement (84),
in particular the guide arrangement (84) being designed with a locking sleeve (84a).

9. The X-ray optics assembly (3) according to one of the claims 1 to 7, **characterized in that** the guide arrangement (84) has a rotatably fixed design,
the adjustment unit (46) rests against the guide sections (82, 83) with circular cylinder lateral surface sections, wherein a shared cylinder axis (ZA) of the circular cylinder lateral surface sections extends through the midpoint (M) of the ball joint (79a), so that when the adjustment unit (46) rotates about the second axis (x), the adjustment unit (46) rotates about the shared cylinder axis (ZA) with respect to the guide arrangement (84), in particular the guide arrangement (84) guiding the adjustment unit (46) in a circular cylindrical area (111).

10. The X-ray optics assembly (3) according to one of the preceding claims, **characterized by** comprising a first adjustment mechanism (91) for pivoting the adjustment unit (46) about a first axis (y) and a second adjustment mechanism (92) for rotating the adjustment unit (46) about a second axis (x).

11. The X-ray optics assembly (3) according to Claim 10, **characterized in that** the adjustment unit (46) has an adjustment lever (73a) which protrudes essentially transversely with respect to the second axis (x), and on which the first and second adjustment mechanisms (91, 92) engage,
the adjustment lever (73a) is deflectable via the first adjustment mechanism (91) in a direction approximately parallel to the second axis (x), and
the adjustment lever (73a) is deflectable via the second adjustment mechanism (92) in a direction approximately parallel to the first axis (y).

12. The X-ray optics assembly (3) according to Claim 10 or 11, **characterized in that** the first adjustment mechanism (91) and the second adjustment mechanism (92) each press the adjustment unit (46) with the force of a respective third spring element (95; 96), in particular a tension spring (95a; 96a), against a displaceable adjustment stop (93; 97), in particular a threaded spindle (93a; 97a) or adjustment screw.

13. An X-ray diffractometer (1), comprising
- an X-ray source (2),
- a position (4) for a sample,
- an X-ray detector (5) which is movable about the position (4) of the sample on a circular arc (6),
- and an adjustment system (14) with which beam paths (15; 16; 17) for an X-ray beam are selectable,
wherein the X-ray diffractometer (1) also includes an X-ray optics assembly (3) according to one of the preceding claims,
wherein the adjustment system (14) of the X-ray diffractometer (1) includes at least the switching system (13) of the X-ray optics assembly (3), and wherein
- the first beam path (15) in a first adjustment of the adjustment system (14), with the switching system (13) in the first position,
- furthermore the second beam path (16) in a second adjustment of the adjustment system (14), with the switching system (13) in the second position,
- and furthermore the third beam path (17) in a third adjustment of the adjustment system (14), with the switching system (13) in the third position,
in each case direct the X-ray beam from the X-ray source (2) to the position (4) of the sample.

14. The X-ray diffractometer (1) according to Claim 13, **characterized in that** the adjustment system (14) also includes a carriage (12) on the primary side on which at least the X-ray source (2) and the X-ray optics assembly (3) are situated, and which may be moved and/or pivoted at least between a first state position and a second state position,
in particular wherein a positional difference (18) between the second state position and the first state position of the carriage (12) on the primary side compensates for an X-ray beam change (19) by the monochromator (9) in the third beam path (17) with respect to the second beam path (16).

15. The X-ray diffractometer (1) according to Claim 13, **characterized in that** the monochromator (9) is designed in such a way that the second beam path (16) and the third beam path (17) on the output side of the X-ray optics assembly (3) extend relative to the X-ray optics assembly (3) in an identical manner, in particular the monochromator (9) including two channel-cut crystals (9b, 9c) in succession in the Bartels arrangement, and the adjustment system (14) includes only the switching system (13) of the X-ray optics assembly (3).

16. The X-ray diffractometer (1) according to one of Claims 13 to 15, **characterized in that** the first beam path (15) in a Bragg-Brentano geometry, after reflection on the position (4) of the sample, focuses the X-ray beam on the circular arc (6), and
the second beam path (16) and the third beam path (17), in each case in a parallel beam geometry, direct the X-ray beam onto the position (4) of the sample.

17. The X-ray diffractometer (1) according to one of Claims 13 to 15, **characterized in that** the first beam path (15) in a Bragg-Brentano geometry, after reflection on the position (4) of the sample, focuses the X-ray beam on the circular arc (6),
the second beam path (16) in a parallel beam geometry directs the X-ray beam onto the position (4) of the sample, and
the third beam path (17) focuses the X-ray beam on the circular arc (6), through the position (4) of the sample,
in particular the monochromator (9) including a Johansson monochromator.

## Revendications

1. Module optique à rayons X (3) pour un diffractomètre de rayons X (1), comprenant un miroir multicouche (7), en particulier un miroir de Goebel, et un système de commutation (13) avec lequel des chemins de faisceau (15 ; 16 ; 17) pour un faisceau de rayons X peuvent être sélectionnés,
dans lequel le module optique à rayons X (3) comprend en outre un monochromateur (9), en particulier un cristal-canal (« channel cut ») (9a),
dans lequel le système de commutation (13) permet de sélectionner trois chemins de faisceau (15 ; 16 ; 17) pour le faisceau de rayons X,
un premier chemin de faisceau (15) passant à côté du miroir multicouche (7) et passant à côté du monochromateur (9) dans une première position du système de commutation (13),
un deuxième chemin de faisceau (16) contenant le miroir multicouche (7) et passant à côté du monochromateur (9) dans une deuxième position du système de commutation (13),
et un troisième chemin de faisceau (17) contenant le miroir multicouche (7) et contenant le monochromateur (9) dans une troisième position du système de commutation (13),
**caractérisé en ce**
**que** le monochromateur (9) est fixé à une unité de réglage (46) qui est portée par une articulation (79) pouvant tourner avec deux degrés de liberté,
**que** l'articulation tournante (79) est réalisée sous la forme d'une articulation à rotule (79a),
**qu'**un ensemble de guidage (84) est prévu, avec deux parties de guidage opposées (82, 83) entre lesquelles l'unité de réglage (46) est guidée en appui, de sorte que l'unité de réglage (46) peut pivoter parallèlement à un plan de guidage (FEB) parallèle aux parties de guidage (82, 83) autour d'un premier axe (y) qui passe par le centre (M) de l'articulation à rotule (79a) et est perpendiculaire au plan de guidage (FEB),
**que** l'unité de réglage (46) peut en outre tourner autour d'un deuxième axe (x) qui passe par le centre (M) de l'articulation à rotule (79a) et est perpendiculaire au premier axe (y),
et **que** l'unité de réglage (46) est, par rapport à la direction du deuxième axe (x), en appui contre les parties de guidage (82, 83) à distance du centre (M) de l'articulation à rotule (79a), de sorte qu'un pivotement de l'unité de réglage (46) autour d'un troisième axe (z), qui passe par le centre (M) de l'articulation à rotule (79a) et est perpendiculaire au premier axe (y) et perpendiculaire au deuxième axe (x), est bloqué.

2. Module optique à rayons X (3) selon la revendication 1, **caractérisé en ce que** le système de commutation (13) présente un chariot (8) déplaçable par rapport au miroir multicouche (7) et un système de diaphragme commutable (10),
le système de diaphragme commutable (10) et le monochromateur (9) étant disposés sur le chariot (8),
et que le déplacement du chariot (8) permet, sélectivement, de disposer dans le faisceau de rayons X
- le système de diaphragme commutable (10) pour sélectionner le premier ou deuxième chemin de faisceau (15 ; 16) ou
- le monochromateur (9) pour sélectionner le troisième chemin de faisceau (17).

3. Module optique à rayons X (3) selon la revendication 2, **caractérisé en ce que** le chariot (8) peut être déplacé sur un corps de base (40) du module optique à rayons X (3) à l'aide de guides (42) entre deux butées de fin de course (100, 101), les deux butées de fin de course (100, 101) étant en particulier conçues réglables.

4. Module optique à rayons X (3) selon la revendication 3, **caractérisé en ce qu'**un goujon de guidage (52) est guidé sur ou dans le chariot (8) et peut être déplacé parallèlement à une direction de déplacement (VRS) du chariot (8) dans une direction de coulissement (SRF) par rapport au chariot (8), et que, dans la direction de coulissement (SRF), un élément d'appui (53, 54), qui peut être déplacé parallèlement à la direction de coulissement (SRF) sur ou dans le chariot (8), est formé de chaque côté du goujon de guidage (52) sur ou dans le chariot (8) et est en appui sur le chariot (8) par un premier élément élastique respectif (55, 56).

5. Module optique à rayons X (3) selon la revendication 4, **caractérisé en ce qu'**une broche d'entraînement (43), sur laquelle est monté un écrou de broche (50) guidé sur le corps de base (40), est formée sur le corps de base (40) du module optique à rayons X (3), et que le goujon de guidage (52) est couplé à l'écrou de broche (50), en particulier par un élément d'entraînement (51) faisant saillie latéralement du goujon de guidage (52).

6. Module optique à rayons X (3) selon l'une des revendications précédentes, **caractérisé en ce que** l'unité de réglage (46) comprend un élément de maintien (69) et un élément de réglage (73), l'élément de maintien (69) présentant une partie sphérique (71), une première partie de liaison (70) de la partie sphérique (71) au monochromateur (9) et une deuxième partie de liaison (72) de la partie sphérique (71) à l'élément de réglage (73).

7. Module optique à rayons X (3) selon l'une des revendications précédentes, **caractérisé en ce que** l'unité de réglage (46) est réalisée avec une partie sphérique (71), la partie sphérique (71) étant disposée entre deux éléments de coussinet d'articulation (74, 75), en particulier les éléments de coussinet d'articulation (74, 75) étant réalisés sous la forme de disques en plastique perforés,
et que les éléments de coussinet d'articulation (74, 75) sont précontraints l'un vers l'autre au moyen d'un ou plusieurs deuxièmes éléments élastiques (76), en particulier de rondelles-ressorts (76a).

8. Module optique à rayons X (3) selon l'une des revendications 1 à 7, **caractérisé en ce que** l'ensemble de guidage (84) est conçu pour pouvoir tourner autour du deuxième axe (x), l'unité de réglage (46) étant, par rapport à la direction du troisième axe (z), en appui contre les parties de guidage (82, 83) à distance du centre (M) de l'articulation à rotule (79a), de sorte que l'unité de réglage (46) entraîne en rotation l'ensemble de guidage (84) lorsqu'elle tourne autour du deuxième axe (x),
en particulier l'ensemble de guidage (84) étant réalisé avec une douille anti-rotation (84a).

9. Module optique à rayons X (3) selon l'une des revendications 1 à 7, **caractérisé en ce**
**que** l'ensemble de guidage (84) est conçu bloqué en rotation,
**que** l'unité de réglage (46) est en appui contre les parties de guidage (82, 83) par des parties de surface latérale de cylindre circulaire, un axe de cylindre commun (ZA) des parties de surface latérale de cylindre circulaire passant par le centre (M) de l'articulation à rotule (79a), de sorte que, lorsque l'unité de réglage (46) tourne autour du deuxième axe (x), l'unité de réglage (46) tourne par rapport à l'ensemble de guidage (84) autour de l'axe de cylindre commun (ZA),
en particulier l'ensemble de guidage (84) guidant l'unité de réglage (46) dans une zone cylindrique circulaire (111).

10. Module optique à rayons X (3) selon l'une des revendications précédentes, **caractérisé en ce qu'**un premier mécanisme de réglage (91) pour faire pivoter l'unité de réglage (46) autour d'un premier axe (y) et un deuxième mécanisme de réglage (92) pour faire tourner l'unité de réglage (46) autour d'un deuxième axe (x) sont prévus.

11. Module optique à rayons X (3) selon la revendication 10, **caractérisé en ce que** l'unité de réglage (46) présente un levier de réglage (73a) qui s'étend sensiblement transversalement au deuxième axe (x) et sur lequel agissent le premier et le deuxième mécanisme de réglage (91, 92),
que le levier de réglage (73a) peut être dévié avec le premier mécanisme de réglage (91) dans une direction approximativement parallèle au deuxième axe (x),
et que le levier de réglage (73a) peut être dévié avec le deuxième mécanisme de réglage (92) dans une direction approximativement parallèle au premier axe (y).

12. Module optique à rayons X (3) selon la revendication 10 ou 11, **caractérisé en ce que** le premier mécanisme de réglage (91) et le deuxième mécanisme de réglage (92) pressent chacun l'unité de réglage (46) avec la force d'un troisième élément élastique respectif (95 ; 96), en particulier d'un ressort de traction (95a ; 96a), contre une butée de réglage réglable (93 ; 97), en particulier une tige filetée (93a ; 97a) ou une vis de réglage.

13. Diffractomètre de rayons X (1) comprenant
- une source de rayons X (2),
- une position (4) pour un échantillon,
- un détecteur de rayons X (5) qui est déplaçable sur un arc de cercle (6) autour de la position (4) de l'échantillon,
- et un système de réglage (14) avec lequel des chemins de faisceau (15 ; 16 ; 17) pour un faisceau de rayons X peuvent être sélectionnés,
le diffractomètre de rayons X (1) comprenant en outre un module optique à rayons X (3) selon l'une des revendications précédentes,
dans lequel le système de réglage (14) du diffractomètre de rayons X (1) comprend au moins le système de commutation (13) du module optique à rayons X (3), et dans lequel
- le premier chemin de faisceau (15) dans un premier réglage du système de réglage (14) avec le système de commutation (13) dans la première position,
- en outre le deuxième chemin de faisceau (16) dans un deuxième réglage du système de réglage (14) avec le système de commutation (13) dans la deuxième position,
- et en outre le troisième chemin de faisceau (17) dans un troisième réglage du système de réglage (14) avec le système de commutation (13) dans la troisième position
dirigent respectivement le faisceau de rayons X de la source de rayons X (2) vers la position (4) de l'échantillon.

14. Diffractomètre de rayons X (1) selon la revendication 13, **caractérisé en ce que** le système de réglage (14) comprend en outre un chariot côté primaire (12) sur lequel sont disposés au moins la source de rayons X (2) et le module optique à rayons X (3) et qui peut être déplacé et/ou pivoté au moins entre une première position et une deuxième position,
en particulier dans lequel une différence de position (18) entre la deuxième position et la première position du chariot côté primaire (12) compense une variation de faisceau de rayons X (19) par le monochromateur (9) dans le troisième chemin de faisceau (17) par rapport au deuxième chemin de faisceau (16).

15. Diffractomètre de rayons X (1) selon la revendication 13, **caractérisé en ce que** le monochromateur (9) est conçu de telle sorte que le deuxième chemin de faisceau (16) et le troisième chemin de faisceau (17) s'étendent de manière identique par rapport au module optique à rayons X (3) du côté sortie du module optique à rayons X (3), en particulier le monochromateur (9) comprenant deux cristaux-canal (« channel cut ») (9b, 9c) l'un derrière l'autre en configuration Bartels,
et que le système de réglage (14) comprend uniquement le système de commutation (13) du module optique à rayons X (3).

16. Diffractomètre de rayons X (1) selon l'une des revendications 13 à 15, **caractérisé en ce que** le premier chemin de faisceau (15) dans une géométrie de Bragg-Brentano focalise le faisceau de rayons X sur l'arc de cercle (6) après réflexion sur la position (4) de l'échantillon,
et que le deuxième chemin de faisceau (16) et le troisième chemin de faisceau (17) dans une géométrie en faisceau parallèle dirigent chacun le faisceau de rayons X vers la position (4) de l'échantillon.

17. Diffractomètre de rayons X (1) selon l'une des revendications 13 à 15, **caractérisé en ce que** le premier chemin de faisceau (15) dans une géométrie de Bragg-Brentano focalise le faisceau de rayons X sur l'arc de cercle (6) après réflexion sur la position (4) de l'échantillon,
que le deuxième chemin de faisceau (16) dans une géométrie en faisceau parallèle dirige le faisceau de rayons X vers la position (4) de l'échantillon,
et que le troisième chemin de faisceau (17) focalise le faisceau de rayons X à travers la position (4) de l'échantillon sur l'arc de cercle (6),
le monochromateur (9) comprenant en particulier un monochromateur Johansson.
